(19) **Europäisches Patentamt**
**European Patent Office**
**Office européen des brevets**

(11) **EP 2 099 606 B1**

(12) **EUROPEAN PATENT SPECIFICATION**

(45) Date of publication and mention
of the grant of the patent:
**29.06.2011 Bulletin 2011/26**

(51) Int Cl.:
***B32B 3/28*** *(2006.01)*    ***B29C 55/18*** *(2006.01)*
***B21D 17/04*** *(2006.01)*

(21) Application number: **07855167.8**

(22) Date of filing: **14.12.2007**

(86) International application number:
**PCT/US2007/087552**

(87) International publication number:
**WO 2008/082915 (10.07.2008 Gazette 2008/28)**

(54) **FILMS, ARTICLES PREPARED THEREFROM, AND METHODS OF MAKING THE SAME**

FOLIEN, DARAUS HERGESTELLTE ARTIKEL UND HERSTELLUNGSVERFAHREN DAFÜR

FILMS, ARTICLES PRÉPARÉS À PARTIR DE CEUX-CI, ET LEURS PROCÉDÉS DE FABRICATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.12.2006 US 877893 P**

(43) Date of publication of application:
**16.09.2009 Bulletin 2009/38**

(73) Proprietor: **Dow Global Technologies LLC**
**Midland, MI 48674 (US)**

(72) Inventors:
• **PATEL, Rajen**
**Lake Jackson, TX 77566 (US)**
• **SAAVEDRA, Jose**
**Lake Jackson, TX 77566 (US)**

(74) Representative: **Hayes, Adrian Chetwynd**
**Boult Wade Tennant**
**Verulam Gardens**
**70 Gray's Inn Road**
**London WC1X 8BT (GB)**

(56) References cited:
**EP-A- 1 757 440**      **WO-A-93/14928**
**WO-A-98/05813**      **WO-A-2006/120238**
**WO-A-2008/006858**   **US-A1- 2003 017 345**

**Description**

**BACKGROUND OF THE INVENTION**

The invention relates to films containing stretched segments, and which are particularly suitable in shrink film and mulch film applications. These films show exceptional shrinkage below the highest melting point of the polymer or polymer blend used to form such films.

Oriented shrink films, exhibiting shrinkage below the highest melting point of the film, are currently made using elaborate processes, such as double bubble, or tenter frame, bi-axial orientation processes. Such processes yield fully stretched film, that is, the entire area of the film is stretched/oriented. Such films are also typically made from polyolefins, primarily using linear low density polyethylenes (LLDPE). Such elaborate biaxial processes are very laborious and expensive, making oriented shrink film expensive. These films are used for shrink wrap of books, compact disk (CD), toys, where high clarity, and a tight wrap appearance, make wrapped products more attractive to the consumer. However, there is a need to develop cost effective oriented shrink film having wide applications, using simpler orientation devices.

There is another class of shrink films, known as blown shrink films, which are made using standard blown film processes. Such blown shrink films are used in beverage over wrap, shrink bundling, and other applications. To obtain a desired cross direction (CD) shrinkage, LDPE/LLDPE blends are typically used to make blown films, even though the use of LDPE in the blend formulation reduces mechanical properties, such as dart, puncture and tear properties. Hence, there is a need to develop cost effective, shrink film for beverage over wrap and shrink bundling applications, and in which the film is made predominantly, or totally, from LLDPE resins for improved mechanical properties (while maintaining sufficient CD orientation for proper film shrinkage).

U.S. Patent 4,153,751 discloses a process and apparatus for selectively stretching incremental portions of a film of material comprising a blend of a thermoplastic orientable polymer and an incompatible second phase, selected from an incompatible polymer or inorganic material, or a polymer matrix having an inorganic filler. The film is introduced into the nip of interdigitating rollers, with the concomitant control of the film velocity to substantially the identical velocity of the surface velocity of the rollers, to form and opaque, low density, microporous film or sheet of material.

U.S. Patent 4,251,585 discloses a process for bi-axially stretching a tubularly-formed sheet of thermoplastic material in first and second stations; and where the first and second stations are provided with sets of rolls having generally sinosoidally-shaped grooves, perpendicular and parallel, respectively, to the axis of each set of rolls, to produce bags of improved strip tensile breaking strength. See also U.S. Patent 4,144,008.

U.S. Patent 4,368,565 discloses a grooved roller assembly comprised of two such grooved rollers, and where each grooved roller is comprised of a plurality of discs having varying diameters, and positioned on a shaft, thereby forming a grooved roller of self-centering groove components. The roller assembly may contain grooved rollers in interdigitating or intermeshing relationship for the lateral stretching of incremental portions of an orientable thermoplastic substrate.

U.S. Patent 4,223,059 discloses a non-woven web of synthetic fibers that is selectively stretched in incremental portions in a first and second station, and where the first and second stations have sets of rolls having grooves, which are parallel and perpendicular, respectively, to the axis of each set of rolls. These grooved rolls may be used to form a bi-axially stretched web. See also U.S. Patent 4,285,100.

U.S. Patent 4,116,892 discloses a process, and product produced, for the selective stretching of incremental portions of a substrate of a thermoplastic material, selected from a thermoplastic orientable polymer, or a blend of thermoplastic orientable copolymer, and which is mixed an incompatible polymer or inorganic material. The substrate is stretched in groove roller pairs. Stretched blends produce opaque, low density and porous sheets.

U.S. Patent 4,350,655 discloses a process for the cold stretching, at high stretch tension, and at low stretch ratios, of a film of a blend of synthetic orientable thermoplastic polymer, and at least 50 weight percent of a coated inorganic filler, selected from calcium carbonate, clays and titanium oxide, and coated with a fatty acid ester of silicon and titanium, to form a highly porous thermoplastic film.

U.S. Patent 4,289,832 discloses an apparatus for the selective stretching of a coated or impregnated substrate of a thermoplastic polymer, or blends thereof, to form an impregnated microporous film thereof.

U.S. Patent 5,691,035 discloses a web material, which exhibits an elastic-like behavior along at least one axis, when subjected to an applied and subsequently released elongation. The web material includes a strainable network having at least two visually distinct regions of a the same material compositions. The first region undergoes a molecular-level deformation, and the second region initially undergoes a substantially geometric deformation, when the web material is subject to an applied elongation in a direction substantially parallel to the axis of elongation. See also U. S. Patent 5,518,801; U. S. Patent 5,151,092; U. S. Patent 6,394,652.

U.S. Patent 5,723,087 discloses a web material, which exhibits an elastic-like behavior along at least one axis, when subject to an applied and subsequently released elongation. The web material contains a strainable network having at least two visually distinct regions of the same material composition. The first region undergoes a molecular level deformation, and the second region initially undergoes a substantially geometric deformation, when the web material is subjected to an applied elongation in a direction substantially parallel to the axis of elongation. See also U. S. Patent 5,518,801.

U.S. Patent 6,605,172 discloses a method of modifying the physical characteristics of a web, which involves passing the web between at least one pair of interengaged rolls to incrementally stretch the film web, and then withdrawing the incrementally stretched web from between the rolls under tension. The modified web has desirable breathing and liquid impermeability, as well as extensibility and a soft, cloth-like textured surface.

U.S. Patent 4,438,167 discloses a process for producing a porous fabric, having at least 100,000 surface perforations per square inch. The porous fabric is prepared by the biaxial stretching, at ambient temperatures, of a sheet of a composite fiber-film substrate, formed by hot calendaring a laminate of a woven or non-woven web of fibers, having residual elongation of at least 40 percent, and synthetic polymeric film constituting at least 20 percent, by volume, of the composite fiber-film substrate. Stretching the composite fiber-film substrate is effected by interdigitizing grooved rollers.

U.S. Patent 5,650,214 discloses a soft web material which exhibits elastic-like behavior along at least one axis, when subject to an applied and subsequently released elongation. The web material contains a strainable network having a plurality of first regions and a plurality of second regions of the same material composition. A portion of the first regions extend in a first direction, while the remainder extends in a second direction, perpendicular to the first direction, to intersect one another. The first region forms a boundary completely surrounding the second regions. The second regions include a plurality of raised rib-like elements.

U.S. Patent 5,205,650 discloses an orientable thermoplastic polymeric film material with at least one stretched zone, in which the material has been stretched in a first direction, and with adjacent, unstretched zones.

U.S. Patent 5,865,926 discloses a cloth-like microporous laminate of non-woven fibrous web and thermoplastic film, and prepared by lamination of a microporous-formable film composition and a non-woven fibrous web, followed by incremental stretching to form the cloth-like microporous laminate.

U.S. Patent 6,818,083 discloses a method of making a laminate sheet having a film layer and a fabric layer. The method includes the step of bonding a film layer to a fabric layer to form a laminate sheet, such that the laminate sheet includes at least one-high bond region, where the strength of the bond between the film and fabric layers is greater that the other regions of the laminate sheet. The method further includes the step of stretching the laminate sheet, such that the high-bond regions are either not stretch or only partially stretched.

U.S. Patent 6,811,643 discloses a method of making a microporous laminate sheet having a first film layer and a second layer. The first film layer includes a pore initiator, and is bonded to the second layer in order to form a laminate sheet. The laminate sheet is then stretched, using at least one CD intermeshing stretcher, and at least one MDO stretching unit.

European Patent Application No. EP 1 482 005 A2 discloses microporous film products permeable to moisture vapor, and which can act as barriers to liquids. Thermoplastic polymers are melt blended, and contain 35 percent to 45 percent, by weight, of a linear low density polyethylene, and 3 percent to 10 percent, by weight, of a low density polyethylene, 40 percent to 55 percent, by weight, calcium carbonate filler particles, and 2 percent to 6 percent, by weight, of a triblock polymer of styrene.

U.S. Patent 5,151,092 discloses absorbent articles having an elastic waste feature that comprises an interconnecting panel zone, a first flexural hinge, joining the interconnecting panel zone with a containment assembly, an elasticized waistband, and a second flexural hinge zone, joining the elasticized waistband with the interconnecting panel zone.

U.S. Patent 6,394,652 discloses a flexible bag comprising at least one sheet of flexible sheet material, assembled to form a semi-enclosed container having an opening defined by a periphery. The bag is expandable in response to forces exerted by its contained contents to provide an increase in volume.

Additional films, sheets, articles and/or manufacturing apparatus are described in one or more of the following: U.S. Patent No. 6,645,691; U.S. Patent No. 4,723,393; U.S. Patent No. 5,006,380; U.S. Patent No. 5,246,110; U.S. Patent No. 7,013,621; U.S. Patent No. 6,706,288; European Patent Application No. EP 0628593A1; International Publication No. WO 01/96104; International Publication No. WO 03/070455; Japanese Publication No. 2001-114379 (Abstract); Japanese Publication No. 2001-002162 (Abstract); and Japanese Publication No. 60-060733 (Abstract).

However none of these references provide a cost effective polyolefin film that can be used in shrinkage applications, with exceptional shrinkage below the melting point of the composition used to form the film, and with improved mechanical properties. Hence, there is a need to develop low cost, shrink film for over wrap and shrink bundling applications, and in which the film is made predominantly, or totally, from polyolefin resins, such as LLDPE resins, with improved mechanical properties (while maintaining sufficient CD orientation for proper film shrinkage). In addition, there is a need for such films that are non-porous, and which can be used in outdoor environments. Some of these needs and others have been met by the following invention.

## SUMMARY OF THE INVENTION

The invention provides a film comprising at least one layer, wherein the at least one layer comprises a surface area, and wherein the surface area comprises a plurality of stretched segments, and
wherein each stretched segment is, independently, at least one inch in length, and
wherein the at least one layer is formed from a composition comprising one or more polyolefins, and
wherein the combined weight of the one or more polyolefins is greater than 90 weight percent, based on the total weight of the composition.

The invention also provides a process for preparing a film comprising at least one layer, said process comprising forming a film, and
incrementally stretching the film to form a plurality of stretched segments within a surface area of the film, and
wherein the each stretched segment is, independently, at least one inch in length, and
wherein the at least one layer is formed from a composition comprising one or more polyolefins, and
wherein the combined weight of the one or more polyolefins is greater than 90 weight percent, based on the total weight of the composition.

## BRIEF DESCRIPTION OF THE DRAWINGS

Figure 1A depicts a schematic of a pair of rolls (each denoted component 1) in an interdigitation assembly, and oriented to stretch film (component 2) in the machine direction. Assembly and components are not drawn to scale.
Figure 1B depicts a schematic of one roll (component 1) used in the interdigitation assembly shown in Figure 1A. The teeth (each component 3) on the roll are all aligned to stretch film in the machine direction. Roller and teeth components are not drawn to scale.
Figure 2A depicts a schematic of a pair of rolls (each denoted component 4) in an interdigitation assembly, and oriented to stretch film (component 6) in the cross direction. Assembly and components are not drawn to scale.
Figure 2B depicts a schematic of one roll (component 4) used in the interdigitation assembly shown in Figure 2A. The teeth (each component 5) on the roll are all aligned to stretch the film in the cross direction. Roller and teeth components are not drawn to scale.

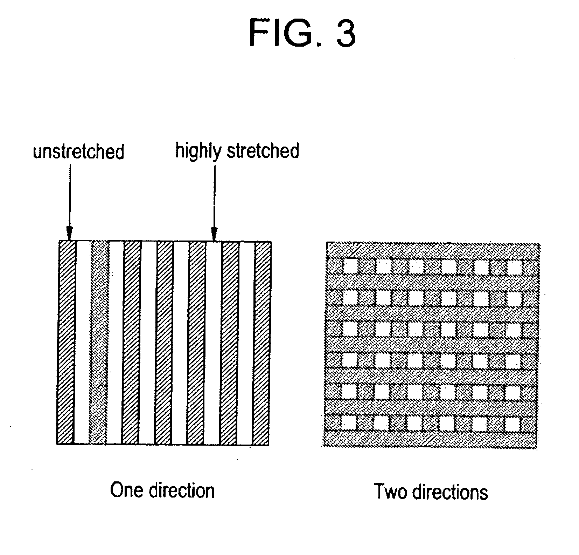

Figure 3 depicts two stretch films. One film depicts stretching in only one direction (MD or CD), and the other film depicts stretching in both the MD and CD directions. As shown in this figure, for each film, the stretched regions are denoted by white areas. The unstretched regions (or substantially unstretched regions) are denoted by the grey areas. Films and stretch configurations are not drawn to scale. In addition, the stretched regions and the substantially unstretched regions typically do not have the same width.
Figure 4 depicts intermeshing teeth (each component 8) on a pair of rollers (each component 7). The distance, denoted by numeral 9, is the Depth of Engagement (DOE).

DETAILED DESCRIPTION OF THE INVENTION

### Overview

The invention provides biaxially or unaxially oriented shrink or display film, formed by interdigitation of films, such as blown or cast films, in machine direction (MD) and/or cross direction (CD). Such films may also be interdigitized in a direction diagonal to machine direction of the film. Such oriented films are useful for shrink wrapping of various packages (for example, books, compact disk, beverages, and other articles of manufacture), and objects using a shrink tunnel. Such films can also be used as a regular packaging film.

The films are formed from polyolefins or other suitable polymers. The oriented film may also consist of small amount of fillers (typically less than 10 weight percent) to modify optics (for example, to make a non-transparent film) or to modify surface properties. The film may also contain other suitable additives, including, but not limited to, antioxidants, slip additives, and antistates.

In particular, the invention provides a film comprising at least one layer, wherein the at least one layer comprises a surface area, and wherein the surface area comprises a plurality of stretched segments, and
wherein each stretched segment is, independently, at least one inch in length, and
wherein the at least one layer is formed from a composition comprising one or more polyolefins, and wherein the combined weight of the one or more polyolefins is greater than 90 weight percent, based on the total weight of the composition.

Examples of polyolefins (or olefin-based polymers) include, but are not limited to, ethylene-based polymers and propylene-based polymers.

In one embodiment, the at least one layer is formed from a composition comprising one or more ethylene-based polymers. In another embodiment, the at least one layer is formed from a composition comprising one or more propylene-based polymers.

In one embodiment, the at least one layer is formed from a composition comprising one or more polyolefins, and wherein the combined weight of the one or more polyolefins is greater than 95 weight percent, based on the total weight of the composition.

In one embodiment of the invention, each stretched segment is, independently, at least five inches in length. In yet another embodiment, each stretched segment is, independently, at least ten inches in length. In another embodiment, the stretched segments, in any direction, are all of the same length. In another embodiment, each stretched segment is continuous along the surface of the film.

In one embodiment of the invention, the surface area is rectangular in shape, and each stretched segment runs the entire length of the surface area. In yet another embodiment, the surface area is rectangular in shape, and each stretched segment runs the entire width of the surface area. In another embodiment of the invention, the surface area is rectangular in shape, and each stretched segment, independently, runs the entire length or the entire width of the surface area.

In one embodiment of the invention, each stretched segment is oriented along the machine direction of the film. In yet another embodiment, each stretched segment is oriented along the cross direction of the film. In another embodiment, each stretched segment is oriented along the diagonal of the film. In another embodiment of the invention, each stretched segment is, independently, oriented along the machine direction or the cross direction of the film.

In one embodiment of the invention, greater than 50 percent of the stretched segments (based on the total number of stretched segments) are oriented along the machine direction of the film, and less than 50 percent of the stretched segments (based on the total number of stretched segments) are oriented along cross direction of the film. In yet another embodiment, less than 50 percent of the stretched segments (based on the total number of stretched segments) are oriented along the machine direction of the film, and greater than 50 percent of the stretched segments (based on the total number of stretched segments) are oriented along cross direction of the film. In yet another embodiment, 50 percent of the stretched segments (based on the total number of stretched segments) are oriented along the machine direction of the film, and 50 percent of the stretched segments (based on the total number of stretched segments) are oriented along cross direction of the film.

In one embodiment, the film is oriented only in the CD direction. In another embodiment, the film is oriented only in the MD direction. In another embodiment, the film is oriented in both the CD and MD directions.

In one embodiment of the invention, the stretched segments are formed by stretching the film at a temperature below the highest melting point of the composition used to form the at least one layer. In another embodiment, the stretched segments are formed by stretching the film at a temperature within 50°C below the highest melting point of the composition used to form the at least one layer (polyolefin layer).

In one embodiment, the stretched segments are formed by stretching the film at a temperature within 50°C below the highest melting point of the film. The highest melting point of a composition or film can be determined by Differential Scanning Calorimetry (DSC).

In one embodiment of the invention, the film comprises less than 10 weight percent of a filler, preferably less than 5 weight percent of a filler, and more preferably less than 1 weight percent of a filler, based on the total weight of the film. In another embodiment, the film does not contain a filler.

In one embodiment, the film comprises less than, or equal to, 50 weight percent of a low density polyethylene (LDPE), more preferably less than, or equal to, 25 weight percent of a LDPE, and more preferably less than, or equal to, 5 weight percent of a LDPE, based on the total weight of the film. In yet another embodiment, the film does not contain a LDPE.

In one embodiment of the invention, the average thickness of the film is less than, or equal to, 1000 microns, preferable less than, or equal to, 500 microns, and more preferably less than, or equal to, 100 microns. In another embodiment, the inventive film has an average thickness greater than, or equal to 10 microns, preferably greater than, or equal to 15 microns, and more preferably greater than, or equal to 20 microns. In another embodiment, the average thickness is greater than, or equal to, 50 microns.

The film thickness is determined from the measured or known film density (in g/cc), the film weight, the film length, and film width, as follows:

(i) weight of film (in grams) = (length (cm) x width (cm) x thickness (cm)) x density (in g/cc); and
(ii) film thickness (cm) = (weight) / (length x width x density).

The average thickness is the average of the film thicknesses determined for several film samples, and typically from five film samples.

In one embodiment of the invention, the film comprises at least two layers.

In another embodiment, the film comprises at least three layers.

In another embodiment, the film comprises at least five layers.

In another embodiment, the film comprises at least seven layers.

In another embodiment, the film comprises at least nine layers.

In another embodiment, the film consists of one layer.

In another embodiment, the film consists of two layers.

In another embodiment, the film consists of three layers.

In another embodiment, the film consists of five layers.

In another embodiment, the film consists of seven layers.

In another embodiment, the film consists of nine layers.

In one embodiment, the total surface area of the stretched segments comprises greater than 50 percent of the total surface area of the film. In another embodiment, the total surface area of the stretched segments comprises less than 50 percent of the total surface area of the film.

In one embodiment of the invention, the film has a basis weight less than 100 $g/m^2$, preferably less than 80 $g/m^2$, more preferably less than 60 $g/m^2$, and even more preferably less than 40 $g/m^2$.

In one embodiment of the invention, the film further comprises a barrier layer. In a further embodiment, the barrier layer is formed from a composition comprising at least one polymer selected from polyamides, polyvinylidene chloride (for example, SARAN™ polymers), polyvinyl alcohol, polyester or combinations thereof.

In one embodiment, the barrier layer is formed from a composition comprising a polyamide. In a further embodiment, the polyamide is polycaprolactam. In another embodiment, the polyamide is poly(hexamethylene adipamide). In another embodiment, the polyamide comprises polymeric units derived from hexamethylene diamine, adipic acid, and caprolactam.

In one embodiment of the invention, the film is formed from a film formed by an extrusion process or a coextrusion process.

In one embodiment of the invention, the film has a density from 0.870 g/cc to 0.960 g/cc, preferably from 0.875 g/cc to 0.955 g/cc, and more preferably from 0.890 g/cc to 0.940 g/cc, and even more preferably from 0.900 g/cc to 0.935 g/cc.

In one embodiment of the invention, the at least one layer of the film, as discussed above, is formed from a composition further comprising an additive selected from UV stabilizers, primary antioxidants, secondary antioxidants, slip agents, antiblock agents, pigments or combinations thereof.

In one embodiment of the invention, the at least one layer is formed from a composition comprising an ethylene/α-olefin interpolymer or a blend thereof. In another embodiment, the at least one layer is formed from a composition comprising an ethylene/α-olefin interpolymer. In another embodiment, the ethylene/α-olefin interpolymer comprises a copolymer formed from monomers selected from ethylene and 1-octene, ethylene and 1-butene, ethylene and 1-hexene, ethylene and 1-pentene, ethylene and 1-heptene, ethylene and propylene, ethylene and 4-methylpentene-1, or mixtures thereof. More preferably monomers are selected from ethylene and 1-octene, ethylene and 1-butene, ethylene and 1-hexene, ethylene and propylene.

In one embodiment, the ethylene/α-olefin interpolymer has a melt index ($I_2$) greater than, or equal to, 0.01 g/10 min, preferably greater than, or equal to, 0.05 g/10 min, and more preferably greater than, or equal to, 0.3 g/10 min. In another embodiment, the ethylene/α-olefin interpolymer has a melt index ($I_2$) less than, or equal to, 20 g/10 min, preferably less than, or equal to, 15 g/10 min, and more preferably less than, or equal to, 10 g/10 min, and even more preferably less than, or equal to, 5 g/10 min. Melt index ($I_2$) is measured in accordance with ASTM D-1238 (190°C/2.16 kg).

In one embodiment, the ethylene/α-olefin interpolymer has a melt index ($I_2$) from 0.01 g/10 min to 20 g/10 min, preferably from 0.1 g/10 min to 10 g/10 min, and more preferably 0.5 g/10 min to 5 g/10 min. Melt index ($I_2$) is measured in accordance with ASTM D-1238 (190°C/2.16 kg).

In one embodiment, the ethylene/α-olefin interpolymer has a density greater than, or equal to, 0.885 g/cc, preferably greater than, or equal to, 0.890 g/cc, and more preferably greater than, or equal to, 0.895 g/cc. In another embodiment, the ethylene/α-olefin interpolymer has a density less than, or equal to, 0.945 g/cc, preferably less than, or equal to, 0.940 g/cc, and more preferably less than, or equal to, 0.935 g/cc.

In one embodiment, the ethylene/α-olefin interpolymer has a density from 0.890 g/cc to 0.940 g/cc, preferably from 0.885 g/cc to 0.935 g/cc, and more preferably from 0.880 g/cc to 0.930 g/cc.

In one embodiment, the ethylene/α-olefin interpolymer is a homogeneously branched linear or a homogeneously branched substantially linear interpolymer. Suitable α-olefins include C3-C20 α-olefins, preferably C3-C10 α-olefins, and more preferably C3-C6 α-olefins, and even more preferably propylene, 1-butene, 1-hexene and 1-octene.

In one embodiment, the ethylene/α-olefin interpolymer is made using a single site catalyst. In a further embodiment, the ethylene/α-olefin interpolymer is made using a metallocene catalyst. In another embodiment, the ethylene/α-olefin interpolymer is made using a metallocene catalyst in a solution polymerization, a gas phase polymerization, or a slurry polymerization.

In one embodiment, the ethylene/α-olefin interpolymer is a heterogeneously branched interpolymer. In another embodiment, the ethylene/α-olefin interpolymer is made using a Ziegler-Natta catalyst. In another embodiment, the ethylene/α-olefin interpolymer is a LLDPE. Suitable α-olefins include C3-C20 α-olefins, preferably C3-C 10 α-olefins, and more preferably C3-C6 α-olefins, and even more preferably propylene, 1-butene, 1-hexene and 1-octene.

The ethylene/α-olefin interpolymer may comprise a combination of two or more suitable embodiments as described herein.

In one embodiment of the invention, the at least one layer is formed from a composition comprising a heterogeneously branched ethylene/α-olefin interpolymer, and a homogeneously branched linear ethylene/α-olefin interpolymer or a homogeneously branched substantially linear ethylene/α-olefin interpolymer. In another embodiment, the at least one layer is formed from a composition comprising a heterogeneously branched ethylene/α-olefin interpolymer, and a homogeneously branched substantially linear ethylene/α-olefin interpolymer. In another embodiment, the composition is formed from an in-reactor blend. In yet another embodiment, the composition is formed from a post-reactor blend. Suitable α-olefins include C3-C20 α-olefins, preferably C3-C10 α-olefins, and more preferably C3-C6 α-olefins, and even more preferably propylene, 1-butene, 1-hexene and 1-octene. Each ethylene/α-olefin interpolymer may comprise a combination of two or more suitable embodiments as described herein.

In one embodiment of the invention, the film has a haze value of less than 30 percent, and preferably less than 20 percent.

In one embodiment of the invention, the shrinkage of the film is at least 10 percent, at 100°C, in the MD and/or CD direction(s). In a further embodiment, the shrinkage in the CD direction is at least 10 percent, and preferably at least 15 percent. In another embodiment of the invention, the shrinkage of the film is at least 10 percent, at 110°C, in the MD and/or CD direction(s). In a further embodiment, the shrinkage in the CD direction is at least 10 percent, and preferably at least 15 percent. In another embodiment of the invention, the shrinkage of the film is at least 10 percent, at 120°C, in the MD and/or CD direction(s). In a further embodiment, the shrinkage in the CD direction is at least 10 percent, and preferably at least 15 percent.

In one embodiment of the invention, the film after being stretched at a film temperature lower than the highest melting point of the film, maintains a density within 10 percent of its initial density, preferably within 5 percent of its initial density, and more preferably within 2 percent of its initial density.

In one embodiment of the invention, the film has a shrink tension of more than 50 psi in MD and/or a shrink tension of at least 10 psi in CD, each measured at the highest melting point of the film.

In one embodiment, the film has a shrink tension of at least 20 psi in CD, and preferably at least 50 psi in CD.

In one embodiment of the invention, the inventive film is formed from a blown film or a cast film. In another embodiment, the film is formed from a blown film. In another embodiment, the film is formed from a cast film.

In one embodiment of the invention, the inventive film is formed from a film formed by an extrusion process or a coextrusion process. In another embodiment, the inventive film is formed from a film formed from an extrusion process. In another embodiment, the inventive film is formed from a film formed from a coextrusion process.

In one embodiment, the inventive film is formed in an in-line film manufacturing process. In another embodiment, the inventive film is formed off-line from a film manufacturing process.

In one embodiment, the inventive film has a percent stretch in any stretch direction from 5 percent to 300 percent, preferably from 10 percent to 200 percent, even more preferably from 10 percent to 150 percent, and most preferably from 10 percent to 100 percent. Preferred stretched direction is MD and/or CD.

In one embodiment, the inventive film is not a breathable film. In another embodiment, the film has a WVTR (Water Vapor Transmission Rate) of less than 300 $gm/m^2/day$, preferably less than 200 $gm/m^2/day$, and more preferably less than 100 $gm/m^2/day$.

An inventive film may comprise a combination of two or more embodiments as described herein.

The invention also provides a shrink film comprising at least one component formed from an inventive film.

The invention also provides a mulch film comprising at least one component formed from an inventive film.

The invention also provides an article comprising at least one component formed from an inventive film.

The invention also provides a package comprising at least one component formed from an inventive film.

The invention also provides an article that has been shrink wrapped using an inventive film. In a further embodiment, the article is shrink wrapped below a film temperature of 140°C, preferably 130°C, and more preferably 120°C.

An inventive article, including, but not limited to, films and packages, may comprise a combination of two or more embodiments as described herein.

The invention also provides a process for preparing a film comprising at least one layer, said process comprising forming a film, and incrementally stretching the film to form a plurality of stretched segments within a surface area of the film, and wherein each stretched segment is, independently, at least one inch in length, and wherein the at least one layer is formed from a composition comprising one or more polyolefins, and wherein the combined weight of the one or more polyolefins is greater than 90 weight percent, based on the total weight of the composition.

In one embodiment, the film is stretched using at least one pair of grooved intermeshing rolls.

In one embodiment, the film is formed by a blown film extrusion process. In yet another embodiment, the film is formed by a cast film extrusion process.

In one embodiment, the film is heated before it is stretched. In a further embodiment, the film is heated by a pair of contact heaters. In yet another embodiment, the film is heated at a temperature below the highest melting point of the film.

In one embodiment, the film, after stretching in the cross direction, is spread flat by means of tenter clamps or curved mount rolls.

An inventive process may comprise a combination of two or more embodiments as described herein.

The stiffness of interdigitized shrink film formed from polyolefin can be controlled by choosing the polyolefin resin density (for example, having a density from 0.86 g/cc to 0.965 g/cc). This novel interdigitized shrink film can be a monolayer or multilayered film, depending upon properties requirements. For example, in a multilayered film, one can put HDPE resin in the core, and LLDPE resin in the skin, to obtain desired optics and shrink properties. One can blend in LDPE resin into resins of any layer, if needed, for example, to improve the optics.

The coefficient of friction of the interdigitized film can be controlled by adding appropriate slip and anti-blocking agent. A novel interdigitized shrink film can also be printed, or pigmented with pigments or $TiO_2$, to give a desired appearance.

The inventive interdigitized film can be used in retail clarity shrink film applications, currently dominated by double bubble oriented shrink film.

The interdigitized film can also be used in industrial shrink film and beverage overwrap shrink film applications (shrink bundling), currently dominated by mono or multilayered, hot-blown shrink film, comprising LDPE resin (mostly blends of LDPE with LLDPE and HDPE resins). One advantage of the inventive interdigitized shrink film is that the desired shrink properties can be obtained without the addition of a LDPE resin, as is the case for hot-blown shrink film. Also, this inventive interdigitized shrink film exhibit a desired shrinkage at lower shrink temperature, translating into energy savings and/or faster production rates. Such shrink films are easier and cheaper to make, compared to elaborate processes such as double bubble or tenter-frame biaxial orientation processes.

**Materials for Film**

The film layer(s) may be prepared from a variety of thermoplastic polymers. Representative polymers include the natural or synthetic resins, such as, but not limited to, styrene block copolymers; rubbers, polyolefins, such as polyethylene, polypropylene and polybutene; ethylene/vinyl acetate (EVA) copolymers; ethylene acrylic acid copolymers (EAA); ethylene acrylate copolymers (EMA, EEA, EBA); polybutylene; polybutadiene; nylons; polycarbonates; polyesters; polyethylene oxide; polypropylene oxide; ethylene-propylene interpolymers, such as ethylene-propylene rubber and ethylene-propylene-diene monomer rubbers; chlorinated polyethylene; thermoplastic vulcanates; ethylene ethylacrylate polymers (EEA); ethylene styrene interpolymers (ESI); polyurethanes; as well as functionally modified polyolefins, such as silane-graft or maleic anhydride graft-modified olefin polymers; and combinations of two or more of these polymers. In one embodiment, the film comprises at least one ethylene-based polymer and/or at least one propylene-based polymer.

A. Ethylene-based Polymers for used in Film

Ethylene-based polymers for used in at least one layer of the film include ethylene homopolymers and ethylene-based interpolymers, each as the sole polymer component or as the major (greater than 50 weight percent, based on total weight of the composition used to form film layer) polymer component in a blend. Such polymers include linear low density polyethylene (LLDPE), high density polyethylene (HDPE), low density polyethylene (LDPE), ultra low density polyethylene (ULDPE), very low density polyethylene (VLDPE), homogeneously branched linear ethylene polymers, homogeneously branched substantially linear ethylene polymers, and heterogeneously branched linear ethylene polymers, and combinations thereof. The amount of one or more of these polymers, if any, in a film composition, will vary depending on the properties desired, the other components, and the type of polyethylene(s).

Suitable polymers also include mixtures of heterogeneous and homogeneous ethylene-based polymers ("composite polyethylene"), which can be used for the film compositions of the present invention, such as those disclosed by Kolthammer et al., in U.S.-A-Patents 5,844,045; 5,869,575; and 6,448,341. Mixtures of heterogeneously branched and homogeneously branched ethylene-based polymers can be prepared by post-reactor blending techniques or by an in-reactor blend. Examples include the ELITE™ resins available from The Dow Chemical Company.

Suitable comonomers useful for polymerizing with ethylene include, but are not limited to, ethylenically unsaturated monomers, conjugated or nonconjugated dienes or polyenes. Examples of such comonomers include the $C_3$-$C_{20}$ α-olefins, such as propylene, isobutylene, 1-butene, 1-pentene, 1-hexene, 4-methyl-1-pentene, 1-heptene, 1-octene, 1-nonene, 1-decene. Preferred comonomers include ethylene, propylene, 1-butene, 1-hexene, and 1-octene, the latter two of which are especially preferred. Other suitable monomers include styrene, halo-or-alkyl-substituted styrenes, tetrafluoroethylenes, vinylbenzocyclobutanes, butadienes, isoprenes, pentadienes, hexadienes, octadienes and cycloalkenes, for example, cyclopentene, cyclohexene and cyclooctene.

Typically, ethylene is copolymerized with one $C_3$-$C_{20}$ $\alpha$-olefin. Preferred comonomers include $C_3$-$C_8$ $\alpha$-olefins, and preferably propylene, 1-butene, 1-pentene, 4-methyl-1-pentene, 1-hexene, 1-heptene, and 1-octene, and more preferably propylene, 1-butene, 1-hexene and 1-octene. In a further embodiment, the $\alpha$-olefin is present in an amount from greater than 0 to 10 mole percent, preferably from 0.1 to 8 mole percent, and more preferably from 0.5 to 6 mole percent, based on the total moles ofpolymerizable monomers.

The terms "homogeneous" and "homogeneously-branched" are used in reference to ethylene/$\alpha$-olefin interpolymers, in which the $\alpha$-olefin comonomer is randomly distributed within a given polymer molecule, and substantially all of the polymer molecules have the same ethylene-to-comonomer ratio.

The homogeneously branched ethylene-based interpolymers that can be used in the practice of this invention include homogeneously branched linear ethylene interpolymers, and homogeneously branched substantially linear ethylene interpolymers.

Included amongst the homogeneously branched linear ethylene interpolymers are ethylene polymers, which lack long chain branching (or measurable amounts of long chain branching), but do have short chain branches, derived from the comonomer polymerized into the interpolymer, and which are homogeneously distributed, both within the same polymer chain, and between different polymer chains. That is, homogeneously branched linear ethylene interpolymers lack long chain branching, just as is the case for the linear low density polyethylene polymers or linear high density polyethylene polymers, and are made using uniform branching distribution polymerization processes, as described, for example, by Elston in U.S. Patent 3,645,992. Commercial examples of homogeneously branched linear ethylene/$\alpha$-olefin interpolymers include TAFMER™ polymers supplied by the Mitsui Chemical Company, EXACT™ and EXCEED™ polymers supplied by Exxon Mobil Chemical Company.

The substantially linear ethylene-based interpolymers are homogeneously branched ethylene polymers having long chain branching. The long chain branches have the same comonomer distribution as the polymer backbone, and can have about the same length as the length of the polymer backbone. The carbon length of a long chain branch is longer than the carbon length of a short chain branch formed from the incorporation of one comonomer into the polymer backbone. Long chain branching is determined by using 13 C Nuclear Magnetic Resonance (NMR) Spectroscopy, and is quantified using the method of Randall (Rev. Macromol. Chem. Phys., 1989, C29 (2&3), p. 285-297), the disclosure of which is incorporated herein by reference.

Typically, "substantially linear" means that the bulk polymer is substituted, on average, with 0.01 long chain branches per 1000 total carbons (including both backbone and branch carbons) to 3 long chain branches per 1000 total carbons. Some polymers are substituted with 0.01 long chain branches per 1000 total carbons, to 1 long chain branch per 1000 total carbons, or from 0.05 long chain branches per 1000 total carbons to 1 long chain branch per 1000 total carbons, or from 0.3 long chain branches per 1000 total carbons to 1 long chain branch per 1000 total carbons.

Commercial examples of substantially linear ethylene-based interpolymers include the ENGAGE™ polymers (available from The Dow Chemical Company), and the AFFINITY™ polymers (available from The Dow Chemical Company).

The substantially linear ethylene-based interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE), or high density polyethylene (HDPE), made, for example, using the technique disclosed by Anderson et al., in U.S. Patent 4,076,698); nor are they in the same class as high pressure, free-radical initiated, highly branched, polyethylenes, such as, for example, low density polyethylene (LDPE), ethylene-acrylic acid (EAA) copolymers and ethylene vinyl acetate (EVA) copolymers.

The homogeneously branched linear or substantially linear ethylene interpolymers are characterized as having a narrow molecular weight distribution ($M_w/M_n$). For the linear and substantially linear ethylene interpolymers, the molecular weight distribution, $M_w/M_n$, is for example, typically less than, or equal to, 3.5, preferably less than, or equal to, 3, and more preferably from 1.5 to 3.5, and even more preferably from 2 to 3. All individual values and subranges from about 1 to 5 or from 1.05 to 5 are included herein and disclosed herein.

The distribution of comonomer branches for the homogeneous linear and substantially linear ethylene-based interpolymers is characterized by its SCBDI (Short Chain Branch Distribution Index) or CDBI (Composition Distribution Branch Index), and is defined as the weight percent of the polymer molecules having a comonomer content within 50 percent of the median total molar comonomer content. The CDBI of a polymer is calculated from data obtained from techniques known in the art, such as, for example, Temperature Rising Elution Fractionation (abbreviated herein as "TREF"), as described, for example, by Wild et al., Journal of Polymer Science, Poly. Phys. Ed., Vol. 20, p. 441 (1982), or in U.S.-A-Patent Nos. 4,798,081 and 5,008,204. The SCBDI or CDBI for the homogeneously branched linear polymers or the homogeneously branched substantially linear polymers is preferably greater than 50 percent, more preferably greater than 70 percent, and even more preferably greater than 90 percent.

The homogeneously branched substantially linear ethylene-based interpolymers used in the film composition of the invention are known, and they, and their method of preparation, are described in, for example, U.S.-A-Patent Nos. 5,272,236; 5,278,272 and 5,703,187.

The heterogeneously branched linear ethylene-based interpolymers can also be used in the present invention. Heterogeneous linear ethylene-based interpolymers include, but are not limited to, copolymers of ethylene and one or more $C_3$ to $C_8$ $\alpha$-olefins. Homopolymers of ethylene can also be prepared using the same catalysts that are used to prepare the heterogeneous systems, such as Ziegler-Natta catalysts. Both the molecular weight distribution, and the short chain branching distribution, arising from $\alpha$-olefin copolymerization, are relatively broad, compared to homogeneously branched linear and homogeneously branched substantially linear ethylene-based interpolymers. Heterogeneous linear ethylene polymers can be made in a solution, slurry, or gas phase process using a Ziegler-Natta catalyst, and are well known to those skilled in the art. For example, see U.S.-A-Patent No. 4,339,507.

Heterogeneously branched linear ethylene-based interpolymers differ from the homogeneously branched ethylene-based interpolymers, primarily in their comonomer branching distribution. For example, heterogeneously branched interpolymers have a branching distribution, in which the polymer molecules of different molecular weights have significant variance in ethylene-to-comonomer ratio. Heterogeneously branched ethylene-based interpolymers are typically prepared with a Ziegler/Natta catalyst system. These linear interpolymers lack long chain branching (or measurable amounts of long chain branching).

Heterogeneously branched ethylene-based interpolymers include, but are not limited to, linear medium density polyethylene (LMDPE), linear low density polyethylene (LLDPE), very low density polyethylene (VLDPE), and ultra low density polyethylene (ULDPE). Commercial polymers include DOWLEX™ polymers, ATTANE™ polymer and FLEXOMER™ polymers (all from The DOW Chemical Company), and ESCORENE™ polymers (from Exxon Mobil).

In one embodiment, the exterior (skin) layers of the film are each formed from a composition comprising an ethylene-based polymer, and an interior layer of the film is formed from a composition comprising an ethylene-based polymer, and preferably a **HDPE.**

In one embodiment, the ethylene-based polymer has a melt index from 0.01 to 20 g/10 min. preferably from 0.1 to 10 g/10 min, and more preferably from 0.2 to 5 g/10 min.

In one embodiment, the ethylene-based polymer has a density from 0.87 g/cc to 0.96 g/cc, preferably from 0.88 g/cc to 0.95 g/cc, and more preferably from 0.89 to 0.94 g/cc.

An ethylene-based polymer may have a combination of two or more suitable embodiments as described herein.


B. Propylene-based Polymers for use in Films

Suitable propylene-based polymers for use in at least one layer of the film include propylene homopolymers, propylene-based interpolymers, as well as reactor copolymers of polypropylene (RCPP), which can contain from 1 to 20 weight percent ethylene or an $\alpha$-olefin comonomer of 4 to 20 carbon atoms. The propylene-based interpolymer can be a random or block copolymer, or a propylene-based terpolymer, and other interpolymers.

Suitable comonomers for polymerizing with propylene include ethylene, 1-butene, 1-pentene, 1-hexene, 1-heptene, 1-octene, 1-nonene, 1-decene, 1-unidecene, 1dodecene, as well as 4-methyl-1-pentene, 4-methyl-1-hexene, 5-methyl-1-hexene, vinylcyclohexane, and styrene. The preferred comonomers include ethylene, 1-butene, 1-hexene, and 1-octene, and more preferably ethylene.

Optionally, the propylene-based polymer comprises monomers having at least two double bonds, which are preferably dienes or trienes. Suitable diene and triene comonomers include 7-methyl-1,6-octadiene; 3,7-dimethyl-1,6-octadiene; 5,7-dimethyl-1,6-octadiene; 3,7,11-trimethyl-1,6,10-octatriene; 6-methyl-1,5-heptadiene; 1,3-butadiene; 1,6-heptadiene; 1,7-octadiene; 1,8-nonadiene; 1,9-decadiene; 1,10-undecadiene; norbornene; tetracyclododecene; or mixtures thereof; and preferably butadiene; hexadienes; and octadienes; and most preferably 1,4-hexadiene; 1,9-decadiene; 4-methyl-1,4-hexadiene; 5-methyl-1,4-hexadiene; dicyclopentadiene; and 5-ethylidene-2-norbornene (ENB).

Additional unsaturated comonomers include 1,3-butadiene, 1,3-pentadiene; norbornadiene; dicyclopentadiene; $C_8$-$C_{40}$ vinyl aromatic compounds, including styrene, o-, m-, and p-methylstyrene, divinylbenzene, vinylbiphenyl, vinylnapthalene; and halogen-substituted $C_8$-$C_{40}$ vinyl aromatic compounds, such as chlorostyrene and fluorostyrene.

Suitable propylene-based interpolymers include propylene/ethylene, propylene/1-butene, propylene/1-hexene, propylene/4-methyl-1-pentene, propylene/1-octene, propylene/ethylene/1-butene, propylene/ethylene/ENB, propylene/ethylene/1-hexene, propylene/ethylene/1-octene, propylene/styrene, and propylene/ethylene/styrene.

Suitable propylene-based polymers are formed by means within the skill in the art, for example, using single site catalysts (metallocene or constrained geometry) or Ziegler Natta catalysts. The propylene and optional comonomers, such as ethylene or alpha-olefin monomers, are polymerized under conditions within the skill in the art, for instance, as disclosed by Galli, et al., Angew. Macromol. Chem., Vol. 120, 73 (1984), or by E.P. Moore, et al. in Polypropylene Handbook, Hanser Publishers, New York, 1996, particularly pages 11-98. Polypropylene polymers include Shell's KF 6100 homopolymer polypropylene; Solvay's KS 4005 polypropylene copolymer; Solvay's KS 300 polypropylene terpolymer; and INSPIRE™ polypropylene resins available from The Dow Chemical Company.

The propylene-based polymer used in the present invention may be of any molecular weight distribution (MWD). Propylene-based polymers of broad or narrow MWD are formed by means within the skill in the art. Propylene-based polymers having a narrow MWD can be advantageously provided by visbreaking or by manufacturing reactor grades (non visbroken) using single-site catalysis, or by both methods.

The propylene-based polymer can be reactor-grade, visbroken, branched or coupled to provide increased nucleation and crystallization rates. The term "coupled" is used herein to refer to propylene-based polymers which are rheology-modified, such that they exhibit a change in the resistance of the molten polymer to flow during extrusion (for example, in the extruder immediately prior to the annular die). Whereas "visbroken" is in the direction of chain-scission, "coupled" is in the direction of crosslinking or networking. As an example of coupling, a couple agent (for example, an azide compound) is added to a relatively high melt flow rate polypropylene polymer, such that after extrusion, the resultant propylene-based polymer composition attains a substantially lower melt flow rate than the initial melt flow rate (MFR). Preferably, for coupled or branched polypropylene, the ratio of subsequent MFR to initial MFR is less than, or equal, to 0.7:1, more preferably less than, or equal to, 0.2:1.

Suitable branched propylene-based polymers for use in the present invention are commercially available, for instance from Montell North America, under the trade designations PROFAX PF-611 and PF-814. Alternatively, suitable branched or coupled propylene-based polymers can be prepared by means, within the skill in the art, such as by peroxide or electron-beam treatment, for instance as disclosed by DeNicola et al., in U.S. Patent No. 5,414,027 (the use of high energy (ionizing) radiation in a reduced oxygen atmosphere); EP 0 190 889 to Himont (electron beam irradiation of isotactic polypropylene at lower temperatures); US Patent No. 5,464,907 (Akzo Nobel NV); EP 0 754 711 (Solvay, peroxide treatment); and US Patent Application No. 09/133,576, filed August 13, 1998 (azide coupling agents). Each of these patents/applications is fully incorporated herein by reference.

Suitable propylene/$\alpha$-olefin interpolymers, containing at least 50 mole percent, and typically greater than 50 mole percent, polymerized propylene (based on total moles of polymerizable monomers), fall within the invention. Suitable polypropylene-based polymers include VERSIFY™ polymers (The Dow Chemical Company) and VISTAMAXX™ polymers (Exxon Mobil Chemical Co.), LICOCENE™ polymers (Clariant), EASTOFLEX™ polymers (Eastman Chemical Co.), REXTAC™ polymers (Hunstman), and VESTOPLAST™ polymers (Degussa). Other suitable polymers include propylene-$\alpha$-olefins block copolymers and interpolymers, and other propylene-based block copolymers and interpolymers known in the art.

Preferred comonomers include, but are not limited to, ethylene, isobutylene, 1-butene, 1-pentene, 1-hexene, 3-methyl-1-pentene, 4-methyl-1-pentene, 1-octene, nonconjugated dienes, polyenes, butadienes, isoprenes, pentadienes, hexadienes (for example, 1,4-hexadiene), octadienes, styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the comonomer is an ethylene or a C4-C20 $\alpha$-olefin. Preferred comonomers include ethylene, 1-butene, 1-pentene, 1-hexene, 1-heptene and 1-octene, and more preferably, include ethylene, 1-butene, 1-hexene and 1-octene, and more preferably, ethylene.

In another embodiment, the propylene-based polymer is a propylene/$\alpha$-olefin interpolymer, which has a molecular weight distribution less than, or equal to, 5, and preferably less than, or equal to, 4, and more preferably less than, or equal to 3. More preferably the propylene/$\alpha$-olefin interpolymer has a molecular weight distribution from 1.2 to 5, and more preferably from 1.3 to 4.5, and more preferably from 1.5 to 4. In another embodiment, the molecular weight distribution is less than about 3.5, preferably less than about 3.0. All individual values and subranges from 1.2 to 5 are included herein and disclosed herein.

In another embodiment, the propylene-based polymers comprise units derived from propylene in an amount of at least 60, preferably at least 80, and more preferably at least 85, weight percent of the interpolymer. The typical amount of units derived from ethylene in propylene/ethylene interpolymers is at least 0.1, preferably at least 1, and more preferably at least 5 weight percent, and the maximum amount of units derived from ethylene present in these interpolymers, typically is not in excess of 35, preferably not in excess of 30, and more preferably not in excess of 20, weight percent of the interpolymer (based on the total weight of polymerizable monomers). The amount of units derived from additional unsaturated comonomer(s), if present, is typically at least 0.01, preferably at least 1, and more preferably at least 5, weight percent, and the typical maximum amount of units derived from the additional unsaturated comonomer(s) typically does not exceed 35, preferably it does not exceed 30, and more preferably it does not exceed 20, weight percent of the interpolymer (based on the total weight of polymerizable monomers). The combined total of units derived from ethylene and any additional unsaturated comonomer typically does not exceed 40, preferably it does not exceed 30, and more preferably it does not exceed 20, weight percent of the interpolymer (based on the total weight of polymerizable monomers).

In one embodiment, the propylene-based polymer has a melt flow rate (MFR) from 0.5 to 20 g/10 min, preferably from 1 to 15 g/10 min, and more preferably from 2 to 10 g/10 min (ASTM D-1238; 230°C/2.16 kg).

In one embodiment, the propylene-based polymer has a density from 0.87 to 0.91 g/cc, and preferably from 0.88 to 0.90 g/cc.

In one embodiment, the propylene-based polymers are made using a metal-centered, heteroaryl ligand catalyst in combination with one or more activators, for example, an alumoxane. In certain embodiments, the metal is one or more of hafnium and zirconium. More specifically, in certain embodiments of the catalyst, the use of a hafnium metal has been found to be preferred as compared to a zirconium metal for heteroaryl ligand catalysts. The catalysts in certain embodiments are compositions comprising the ligand and metal precursor, and, optionally, may additionally include an activator, combination of activators or activator package.

A catalysts used to make the propylene-based polymers may additionally include catalysts comprising ancillary ligand-hafnium complexes, ancillary ligand-zirconium complexes, and optionally activators, which catalyze polymerization and copolymerization reactions, particularly with monomers that are olefins, diolefins or other unsaturated compounds. Zirconium complexes and hafnium complexes can be used. The metal-ligand complexes may be in a neutral or charged state. The ligand to metal ratio may also vary, the exact ratio being dependent on the nature of the ligand and metal-ligand complex. The metal-ligand complex or complexes may take different forms, for example, they may be monomeric, dimeric, or of an even higher order. Suitable catalyst structures and associated ligands are described in U.S. Patent 6,919,407, column 16, line 6 to column 41, line 23, which is incorporated herein by reference. In a further embodiment, the propylene-based polymer comprises greater than 50 weight percent propylene (based on the total amount of polymerizable monomers) and at least 5 weight percent ethylene (based on the total amount of polymerizable monomer), and has 13C NMR peaks, corresponding to a region error, at about 14.6 and 15.7 ppm, and the peaks are of about equal intensity (for example, see U.S. Patent 6,919,407, column 12, line 64 to column 15, line 51).

The propylene-based polymers can be made by any convenient polymerization process. In one embodiment, the process reagents, for example, (i) propylene, (ii) ethylene and/or one or more additional unsaturated comonomers, (iii) catalyst, and, (iv) optionally, solvent, and/or a molecular weight regulator (for example, hydrogen), are fed to a single reaction vessel of any suitable design, for example, stirred tank, loop, or fluidized- bed. The process reagents are contacted within the reaction vessel, under appropriate conditions (for example, solution, slurry, gas phase, suspension, high pressure), to form the desired polymer, and then the output of the reactor is recovered for post-reaction processing. All of the output from the reactor can be recovered at one time (as in the case of a single pass or batch reactor), or it can be recovered in the form of a bleed stream, which forms only a part, typically a minor part, of the reaction mass (as in the case of a continuous process reactor, in which an output stream is bled from the reactor, at the same rate at which reagents are added, to maintain the polymerization at steady-state conditions). "Reaction mass" means the contents within a reactor, typically during, or subsequent to, polymerization. The reaction mass includes reactants, solvent (if any), catalyst, and products and byproducts. The recovered solvent and unreacted monomers can be recycled back to the reaction vessel. Suitable polymerization conditions are described in U.S. Patent 6,919,407, column 41, line 23 to column 45, line 43, incorporated herein by reference.

A propylene-based polymer may have a combination of two or more suitable embodiments as described herein.

## C. Additives

Stabilizer and antioxidants may be added to a polymer formulation to protect the final resin from degradation, caused by reactions with oxygen, which are induced by such things as heat, light, or residual catalyst from the raw materials. Antioxidants are commercially available from Ciba Specialty Chemicals, and include Irganox® 565, 1010 and 1076, which are hindered phenolic antioxidants. These are primary antioxidants, which act as free radical scavengers, and may be used alone or in combination with other antioxidants, such as phosphite antioxidants, like Irgafos® 168, also available from Ciba Specialty Chemicals. Phosphite antioxidants are considered secondary antioxidants, are not generally used alone, and are primarily used as peroxide decomposers. Other available antioxidants include, but are not limited to, Cyanox® LTDP, available from Cytec Industries in Stamford, Conn., and Ethanox® 1330, available from Albemarle Corp. in Baton Rouge, Louisiana. Many other antioxidants are available for use by themselves, or in combination with other such antioxidants. Other polymer additives include, but are not limited to, ultraviolet light absorbers, antistatic agents, pigments (such as carbon black and titanium dioxide), dyes, nucleating agents, fillers slip agents, fire retardants, plasticizers, processing aids, lubricants, stabilizers, smoke inhibitors, viscosity control agents and anti-blocking agents.

In one embodiment, a composition further comprising an additive selected from the group consisting of UV stabilizers, primary antioxidants, secondary antioxidants, slip additives, antiblock agents, pigments, fillers, and combinations thereof.

In one embodiment, a composition further comprising an additive selected from the group consisting of UV stabilizers, primary antioxidants, secondary antioxidants, slip additives, antiblock agents, pigments, and combinations thereof.

**Process for Forming the Film Compositions of the Invention**

A film of the invention can be prepared by selecting the polymers suitable for making each layer; forming a film of each layer, and, in the case of multilayered films, bonding the layers, or coextruding or casting one or more layers. Desirably, the film layers are bonded continuously over the interfacial area between films.

For each layer, typically, it is suitable to extrusion blend the components and any additional additives such as slip, anti-block, and polymer processing aids. The extrusion blending should be carried out in a manner, such that an adequate degree of dispersion is achieved. The parameters of extrusion blending will necessarily vary depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, blown films, cast film, cast film or sheet extrusion, coextrusion or lamination. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192.

Other film manufacturing techniques are disclosed in U.S. 6,723,398 (Chum et al.). Post processing techniques, such as radiation treatment and corona treatment, especially for printing applications, can also be accomplished with the materials of the invention. Film made from the invention can also be silane cured, or the polymers used to make the inventive article can be grafted post manufacture (such as maleic anhydride grafted polymers, including techniques disclosed in U.S. 4,927,888 (Strait et al.), U.S. 4,950,541 (Tabor et al.), U.S. 4,762,890 (Strait et al.), U.S. 5,346,963 (Hughes et al.), U.S. 4,684,576 (Tabor et al.).

The interdigitized film can be perforated and film sheets can be sent to a converter for bag manufacturing. Film sheets may be perforated, after stretching, using known methods of the art. The shape and size of the perforations, and the amount of perforations will depend on the final use of the film composition.

Sheets of the film composition can be bonded by heat sealing or by use of an adhesive. Heat sealing can be effected using conventional techniques, including, but not limited to, a hot bar, impulse heating, side welding, ultrasonic welding, or other alternative heating mechanisms as discussed above.

The film compositions of the aforementioned processes may be made to any thickness depending upon the application. Typically, the inventive films have an average thickness less than, or equal to, 1000 microns, preferably less than, or equal to, 500 microns, and more preferably less than, or equal to, 100 microns. In a preferred embodiment, the films have an average thickness from 5 to 300 microns, preferably from 10 to 200 microns, more preferably from 15 to 100 microns.

Examples of some inventive films include, but are not limited to, single-layer films, two-layer films, three layer films and five-layer films.

In one embodiment, an inventive film comprises at least three layers, or at least five layers with an inner layer formed from a composition comprising at least one polymer selected from polyamide, polyvinylidene chloride, ethylene vinyl alcohol (EVOH), polyester or combinations thereof.

Examples of polyamides include, but are not limited to, Nylon 6 and Nylon 6,6.

Commercial examples of polyvinylidene chloride include, but are not limited to, SARAN™ polymers (available from The Dow Chemical Company).

Commercial examples of ethylene vinyl alcohols include, but are not limited to, EVAL polymers (available from EVAL company of North America).

Examples of polyesters include, but are not limited to, polyethylene terephthalate (PET) and polyethylene napthalate (PEN).

In one embodiment, the inner layer is formed from a composition comprising a polyamide. In a further embodiment, the polyamide is selected from Nylon 6, Nylon 6,6, or combinations thereof. In another embodiment, the polyamide comprises polymeric units derived from hexamethylene diamine, adipic acid, and caprolactam.

In one embodiment, the inner layer of a five layered film is formed from a composition comprising a polyamide, and the inner layer is adjacent to two tie layers, each formed from a composition comprising a carboxylic acid grafted ethylene-based polymer and/or an anhydride grafted ethylene-based polymer, such as, for example, AMPLIFY™ GR205 (available from The Dow Chemical Company). In a further embodiment, the tie layer composition also comprises a linear low density ethylene-based polymer, such as, for example, ATTANE™ 4201 (available from The Dow Chemical Company). In a further embodiment, each tie layer is formed from a composition comprising 10-30 weight percent of a carboxylic acid grafted ethylene-based polymer and/or an anhydride grafted ethylene-based polymer, such as, for example, AMPLIFY™ GR205; and 70-90 weight percent of a linear low density ethylene-based polymer, such as, for example, ATTANE™ 4201. Each weight percentage is based on the total weight of the composition.

In one embodiment, the inner layer of a five layered film is formed from a composition comprising a polyamide, and the inner layer is adjacent to two tie layers, each formed from a composition comprising a carboxylic acid and/or an anhydride grafted ethylene-based polymer, such as, for example, AMPLIFY™ GR205 (available from The Dow Chemical Company). In a further embodiment, each outer layer is formed from a composition comprising a linear low density ethylene-based polymer, such as, for example, ATTANE™ 4201 (available from The Dow Chemical Company).

In one embodiment, the inner layer of a five layered film is formed from a composition comprising a polyamide, and the inner layer is adjacent to two tie layers, each formed from a composition comprising a carboxylic acid grafted ethylene-based polymer and/or an anhydride grafted ethylene-based polymer, such as, for example, AMPLIFY™ GR205 (available from The Dow Chemical Company). In a further embodiment, the tie layer composition also comprises a linear low density ethylene-based polymer, such as, for example, ATTANE™ 4201 (available from The Dow Chemical Company). In a further embodiment, each tie layer is formed from a composition comprising 10-30 weight percent of a carboxylic acid grafted ethylene-based polymer and/or an anhydride grafted ethylene-based polymer, such as, for example, AMPLIFY™ GR205; and 70-90 weight percent of a linear low density ethylene-based polymer, such as, for example, ATTANE™ 4201. Each weight percentage is based on the total weight of the composition. In another embodiment, each outer layer is formed from a composition comprising a linear low density ethylene-based polymer, such as, for example, ATTANE™ 4201 (available from The Dow Chemical Company).

In one embodiment, the five layered film has the following film configuration: 35% polyolefin / 10% tie layer / 10% polyamide / 10% tie layer / 35% polyolefin. The percentages represent the percentage film thickness based on the total thickness of the film.

The thickness of a film layer can be determined, as known in the art, from the mass ratios of each layer composition of the extruders used to form a multilayered film, and the final thickness of the multilayered film. For each film layer, the solid state density of each composition is determined, and the mass flow (kg/hr) of the associated extruder is known from the commonly used gravimetric feeders. From these two parameters, the volumetric flow of each layer composition can be determined. The volume ratio of each layer can be determined from the volume flow of the individual layer divided by the total volume flows of all layer compositions. For a constant total film thickness and width, the thickness ratio for each layer is the same as the volume ratio.

The thickness of a film layer can also be determined, as known in the art, by microscopic techniques, such as optical microscopy or electronic microscopy. As an example, a thin slice of the film is cut perpendicularly to the plane of the film as follows. The film is cooled down in liquid nitrogen in a microtome holder. Then the microtome blade cuts several slices of about 10 to 15 microns thickness. These slices are then observed with an optical microscope. A software program can then measure, on the projected image, the thickness of each layer. This can be done at different points and then the average can be taken. The layers are clearly distinguished by their different contrast.

In one embodiment, the five layered film is stretched only in the CD direction.

In another embodiment, the five layered film is stretched only in the MD direction.

In another embodiment, the five layered film is stretched in both the CD and MD directions.

In one embodiment the five layered film is formed from a blown film.

In another embodiment, the five layered film is formed from a cast film.

In another embodiment the five layered film is formed from an extruded film.

The five layered film may have a combination of two or more embodiments as described herein.

In one embodiment, a three layered film has the following film configuration: 10-30% homogeneously branched substantially linear ethylene-based polymer/ 80-40% polyolefin / 10-30% homogeneously branched substantially linear ethylene-based polymer. The percentages represent the percentage film thickness based on the total thickness of the film.

In one embodiment, a three layered film has the following film configuration: 10-30% homogeneously branched linear ethylene-based polymer/ 80-40% polyolefin / 10-30% homogeneously branched linear ethylene-based polymer. The percentages represent the percentage film thickness based on the total thickness of the film.

In one embodiment, a three layered film has the following film configuration: 10-30% homogeneously branched linear and substantially linear ethylene-based polymer/ 80-40% polyolefin / 10-30% homogeneously branched linear and substantially linear ethylene-based polymer. The percentages represent the percentage film thickness based on the total thickness of the film.

In one embodiment, the polyolefin is an ethylene-based polymer.

In one embodiment, the three layered film is stretched only in the CD direction.

In another embodiment, the three layered film is stretched only in the MD direction.

In another embodiment, the three layered film is stretched in both the CD and MD directions.

In one embodiment the three layered film is formed from a blown film.

In another embodiment, the three layered film is formed from a cast film.

In another embodiment the three layered film is formed from an extruded film.

The three layered film may have a combination of two or more embodiments as described herein.

INTERDIGITATION

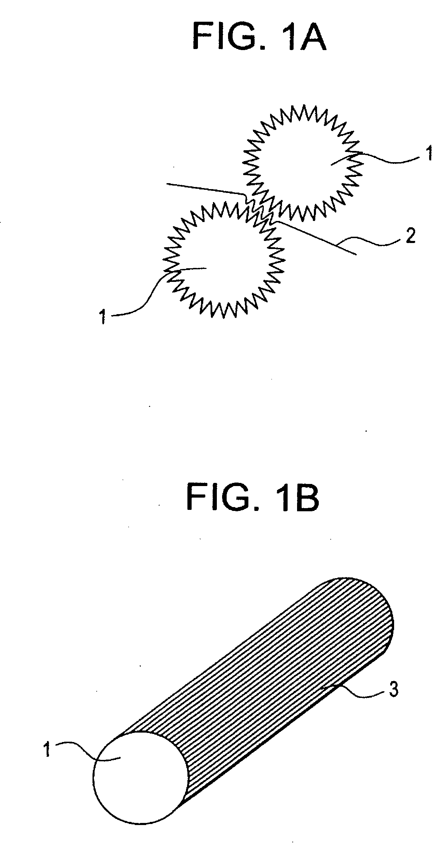

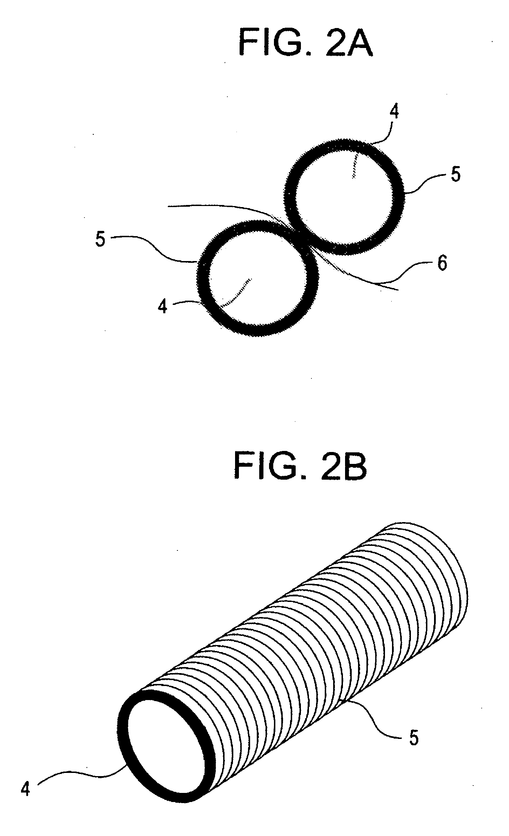

The films are subject to an interdigitized stretching process using a roller assembly, comprised of at least two rollers, for example, see Figures 1 and 2. Examples of interdigitation assembles are described in the following U.S. patents, U.S. 4,144,008; U.S. 4,368,565; U.S. 4,223.059; U.S. 4,350,655; U.S. 4,251,585; U.S. 4,153,751; U.S. 4,350,655; U.S. 4,438,167; U.S. 4,285,100; U.S. 4,289,832; and U.S. 5,865,926.

A number of different stretchers and techniques may be employed to stretch the film. Some of these techniques are described in U.S. Patent 5,865,926, fully Such assemblies typically include one or more cylinders, one or more drive means, gear elements, shafts and bearings. Each roll or roller may have a diameter from 6 inches to 24 inches.

Machine Direction (MD), Cross Direction (CD), or diagonal intermeshing rollers may be employed to produce the incrementally stretched films of the invention. In one embodiment, the film is stretched using, for instance, the MD and/or CD intermeshing roller with one pass through the stretcher, with a depth of roller engagement from 0.05 inch to 0.23 inch, and at speeds from about 200 fpm to 500 fpm, or faster.

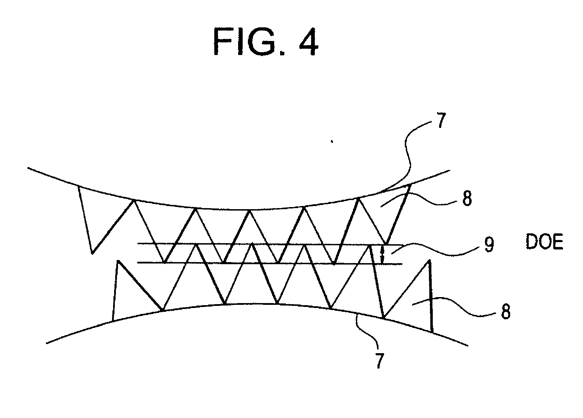

Examples of an interdigitation unit for stretching in MD and CD are shown in Figures 1 and 2, respectively. Such interdigitation units consist of set of gears with teeth, as shown in Figure 4, oriented in particular direction for stretching in a desired direction. The interdigitation unit, as shown in Figure 1, for MD stretching, and in Figure 2, for CD stretching, would stretch only the part of the film (in forms of "strips" of stretched areas) in one direction. Hence, such substantially oriented films of the current invention are not fully oriented or stretched. The degree of stretching in the machine direction and the cross direction, and the stretching temperature, can be controlled to yield desired shrink properties (example, shrink and shrink force) and final film physical properties.

The interdigitation in the machine direction and/or the cross direction of a film, for example, a blown film or a cast film, is done below the highest melting point of the film, by using set of gears, which stretch segments of the film, at a temperature of at least 5°C below the peak melting point of the highest melting polymer used in the film formulation. Such interdigitation unit can be coupled with a cast or blown film line, to provide an on-line stretching process. The stretching of the film can also be done off-line.

The invention provides oriented shrink or packaging films, prepared using such interdigitation unit. The films are formed from polyolefins or other suitable polymers. As discussed above, the oriented film, optionally, may also consist of small amount of fillers (typically less than 10 weight percent) to modify optics (for example, to make non-transparent film) or to modify surface properties. The film may also contain other suitable additives, including, but not limited to, antioxidants, slip additives, and antistates.

The oriented shrink films of the invention can be also obtained by first stretching the film in the machine direction (MD) using set of rolls, where a second roller rotates at a faster velocity than a first roller, and this differential in velocities allows for the stretching of the film in the machine direction. Such a process is typically called a "Machine Direction Orientation" or MDO process. The stretch ratio and temperature may be set, as desired, to avoid unequal film gage. The MD oriented film can then be stretched in the cross direction (CD) using the interdigitized grooved roller to obtained desired CD shrinkage. If desired, CD stretching can be first done using an interdigitized grooved roll, and the MD stretching can be done, either using an interdigitized grooved roller or a Machine Direction Orientation process (set of draw rolls).

The MD and CD shrinkage of such interdigitized film can be modified, for example, by changing the Depth of Engagement (DOE), or designing a different set of rolls with a different pitch and blade width. The "Depth of Engagement (DOE)" is a variable related to the amount of overlap between the intermeshing teeth on two sets of rollers, and controls the degree of stretching. Hence, one can design or "tune-in" the shrinkage properties of the film, as desired, by changing the roll settings as described above. For example, it is known that for beverage overwrap film or tray shrink film, one needs only about 10 percent CD shrinkage. Higher CD shrinkage is not desired in such applications to preserve the "bulls-eye." The shrinkage of the interdigitized film can be increased even further via a second step of ring-rolling in the machine direction and cross direction, if desired.

In another embodiment, the inventive film has a percent stretch in any stretch direction from 5 percent to 300 percent, preferably from about 10 percent to 200 percent, even more preferably from about 10 percent to 150 percent, and most preferably from 10 percent to 100 percent. Preferred stretched direction is MD and/or CD.

"Percent stretch" is measured by putting a mark of known length, L0, (for example, 5 cm) in the stretch direction, before the film goes through intermeshing grooved rolls. The length of the mark, L, is measured after the film is incrementally stretched using intermeshing grooved rolls. The percent stretch is then calculated using standard formula ((L-L0)/L0)*100).

In a preferred embodiment, the inventive film is not a breathable film, and has a WVTR (Water Vapor Transmission Rate) of less than 300 $gm/m^2/day$, preferably less than 200 $gm/m^2/day$, and more preferably less than 100 $gm/m^2/day$. The WVTR is measured at 23°C and 90% RH (Relative Humidity).

APPLICATIONS

In one embodiment, an interdigitized, monoaxially oriented, shrink film formed from a polyolefin, and oriented in cross direction (CD) only, using the pair of grooved rolls, can be used as a mulch film. The CD shrinkage of such interdigitized oriented mulch film at about 60°C-80°C is very advantageous in keeping the film tight over the planted field rows. If mulch films loosen, due to the high field temperatures, then strong winds may cause the film to flap and tear. Mulch film may also contain pigments, such as carbon black, and other additives, as needed for UV protection. A mulch film may also comprise one or more barrier layers, as described below.

Another potential application is in shrink over shrink films. There are many applications where several bundles of products are bagged in a primary shrink film, which, in turn, is bagged in a secondary shrink bag. It is desirable for the secondary shrink bag to have a lower shrinkage temperature, in order for the film to avoid sticking to the inner primary shrink film. Interdigitized films that shrink below the film melting point can help to avoid sticking problems to the primary shrink films.

Interdigitized, biaxially oriented, shrink multi-layer film with a layer exhibiting an oxygen barrier, moisture barrier, or other kinds of barriers, such as methyl bromide barrier, can also be used in shrink wrapping of sensitive food articles, such as fish or pieces of meat, for prolonged shelf life. Barrier polymers, such as SARAN™ (Trademark of the Dow Chemical Company), polyvinyl alcohols, Nylon (polyamides), and others, can be used in a barrier layer of the multi-layer, interdigitized, shrink film.

Interdigitized, biaxially oriented, shrink film made from polyolefins resins, preferably polyethylene resins, and more preferably LLDPE resins having a density from 0.915 g/cc to 0.940 g/cc, can also be potentially used in shrink hood pallet wrapping application. Low temperature shrinkage of such film can be a potential energy saving advantage, and provide a tight wrapping of the pallet. Potentially, low melt index LLDPE resins, and the blown films made from them, can be used to make interdigitized shrink films for improved toughness.

Interdigitized, biaxially oriented, shrink film made from polyolefins resins, preferably polyethylene resins, preferably LLDPE resins having a density from 0.915 to 0.940 g/cc, can also be used in shrink bundling applications, or for beverage overwrap applications. In some of these applications, low level of CD shrinkage is desired for getting proper "bulls eye" formation for package integrity. The shrink properties of interdigitized shrink film of this invention can be modified by changing the depth of engagement, the pitch of the roll blades (distance between the blades or teeth) or the starting resin density, among other things. One key advantage of the shrink film of present invention is that shrinkage in CD is obtained from film formed from LLDPE resin, without need to blend in high pressure LDPE resin into a LLDPE resin.

The interdigitized, grooved roll film can also be used to make storage bags (for example, ZIPLOC bags from S.C. Johnson and Wax) with a reduction in the basis weight of the bag, while maintaining a "thicker feeling" of the bag. Such film can be also be used in other applications where "thick feel" is an important property. Note that interdigitized, grooved roll film of the present invention has uneven thickness, as the film, in contact with the "tooth" or "blade" of the rolls, does not stretch, or does not stretch significantly.

Beverage overwrap and industrial shrink films (currently made using blown film process, with films comprising LDPE, due to its long chain branching to give CD shrinkage) can also be made by using inventive films. For example, cast film or blown film from 100 weight percent LLDPE resin, based on the sum weight of polymeric components, or a blend of LLDPE/LDPE resin, can be stretched only in the cross direction, using interdigitized, grooved rollers. Such films exhibit adequate machine direction shrinkage at temperature above the melting point of the film, even before the cross direction stretching step. The desired CD shrinkage can then be obtained by stretching such film (formed from 100 weight percent LLDPE, or its blends) in the cross direction, using an interdigitized grooved rollers as described herein. Furthermore, such films can be further stretched in the machine direction using an interdigitized grooved roller to obtain MD shrinkage below the melting point of the film.

**DEFINITIONS**

Any numerical range recited herein, include all values from the lower value to the upper value, in increments of one unit, provided that there is a separation of at least two units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been provides, as discussed herein, in reference to film thickness, melt index, density, and other properties.

The terms "stretched segment," or "stretched segments," as used herein, refer to an area of incremental stretching within the film surface. The film is stretched at the molecular level in response to applied deformation between grooves of two intermeshing rolls.

The term "interdigitation assembly," as used herein, refers to a stretching apparatus comprising at least two intermeshing grooved rolls or rollers, or rolls or rollers with intermeshing teeth.

The term "intermeshing," as used herein, refers to the overlap region between two sets of grooved or teeth-containing rolls or rollers

The term "multilayered film," as used herein, refers to a film structure with more than one tier or layer.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The term "thermoplastic polymer" or "thermoplastic composition" and similar terms, mean a polymer or polymer composition that is substantially thermally extrudable or deformable, albeit relatively aggressive conditions may be required.

The terms "blend" or "polymer blend," as used herein, refer to a blend of two or more polymers. Such a blend may or may not be miscible. Such a blend may or may not be phase separated. Such a blend may or may not contain one or more domain configurations, as determined from transmission electron microscopy, light scattering, x-ray scattering, and other methods known in the art.

The term, "ethylene-based polymer," as used herein, refers to a polymer that comprises more than 50 mole percent polymerized ethylene monomers, based on the total moles of polymerizable monomeric units, and optionally, one or more polymerized comonomers.

The term, "propylene-based polymer," as used herein, refers to a polymer that comprises more than 50 mole percent polymerized propylene monomers, based on the total moles of polymerizable monomeric units, and optionally, one or more polymerized comonomers.

The term, "ethylene-based interpolymer," as used herein, refers to a polymer that comprises more than 50 mole percent polymerized ethylene monomers, based on the total moles of polymerizable monomeric units, and at least one polymerized comonomer.

The term, "propylene-based interpolymer," as used herein, refers to a polymer that comprises more than 50 mole percent polymerized propylene monomers, based on the total moles of polymerizable monomeric units, and at least one polymerized comonomer.

The term, "ethylene/$\alpha$-olefin interpolymer," as used herein, refers to a polymer that comprises more than 50 mole percent polymerized ethylene monomers, based on the total moles of polymerizable monomeric units, a polymerized $\alpha$-olefin, and optionally, at least one other polymerized comonomer.

The term, "propylene/$\alpha$-olefin interpolymer," as used herein, refers to a polymer that comprises more than 50 mole percent polymerized propylene monomers, based on the total moles of polymerizable monomeric units, a polymerized $\alpha$-olefin, and optionally, at least one other polymerized comonomer.

The term "barrier layer," is known in the art, and refers to a barrier to the transport of small and/or large molecules. A barrier may be specific to one or more types of molecules. Barrier layers can be used to hinder or block the transport of water vapor, oxygen, methyl bromide, and other compounds.

**TEST PROCEDURES**

The specific test parameters within each test will depend on the polymer or polymer blend used. Some of the tests below describe test parameters that are indicated as representative of polyolefin resins. The particular parameters of a test are not intended to limit the scope of this invention. Those skilled in the art will understand the limitations of a particular set of test parameters, and will be able to determine appropriate parameters for other types of polymers and blends.

The density of the ethylene homopolymers and interpolymers, and other polyolefins is measured in accordance with ASTM D-792-00. ASTM D-792-00 can also be used to measure density of other polymers as noted in this test.

Melt Index ($I_2$) of ethylene homopolymers and ethylene-based interpolymers is measured in accordance with ASTM D-1238-04, condition 190°C/2.16 kg. The melt flow rate (MFR) of propylene homopolymers and propylene-based interpolymers is measured in accordance with ASTM D-1238-04, condition 230°C/2.16 kg.

The average molecular weights and molecular weight distributions for ethylene-base polymers can be determined with a chromatographic system consisting of either a Polymer Laboratories Model PL-210 or a Polymer Laboratories Model PL-220. The column and carousel compartments are operated at 140°C for ethylene-based polymers. The columns are three Polymer Laboratories, 10-micron, Mixed-B columns. The solvent is 1,2,4 trichlorobenzene. The samples are prepared at a concentration of 0.1 gram of polymer in 50 milliliters of solvent. The solvent used to prepare the samples contains 200 ppm of butylated hydroxytoluene (BHT). Samples are prepared by agitating lightly for two hours at 160°C. The injection volume is 100 microliters, and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)):

$$M_{polyethylene} = A \times (M_{polystyrene})^B,$$

where M is the molecular weight, A has a value of 0.4315 and B is equal to 1.0.

Polyethylene equivalent molecular weight calculations are performed using Viscotek TriSEC software, Version 3.0. The molecular weights for propylene-based polymers can be determined using Mark-Houwink ratios according to ASTM D6474.9714-1, where, for polystyrene, a = 0.702 and log K = -3.9, and for polypropylene, a = 0.725 and log K = -3.721. For propylene-based samples, the column and carousel compartments are operated at 160°C.

Percent crystallinity for ethylene-based polymers and propylene-based polymers can be determined by differential scanning calorimetry (DSC), using a TA Instruments Model Q1000 Differential Scanning Calorimeter. A sample of around five to eight milligram size is cut from the material to be tested, and placed directly in the DSC pan for analysis. For higher molecular weight materials, a thin film is normally pressed from the sample. Samples for testing may, however, be cut from plaques. The sample is first heated, at a rate of about 10°C/min, to 190°C for ethylene-based polymers (230°C for propylene-based polymers), and held isothermally for three minutes at that temperature to ensure complete melting (the first heat). Then the sample is cooled, at a rate of 10°C per minute, to -60°C for ethylene-based polymers (-40°C for propylene-based polymers), and held there isothermally for three minutes, after which, it is again heated (the second heat), at a rate of 10°C per minute, until complete melting. The thermogram from this second heat is referred to as the "second heat curve." Thermograms are plotted as watts/gram versus temperature.

The percent crystallinity in the ethylene-based polymers may be calculated using heat of fusion data, generated in the second heat curve (the heat of fusion is normally computed automatically by typical commercial DSC equipment, by integration of the relevant area under the heat curve). The equation for ethylene-based samples is: % Cyst. = ($H_f \div$ 292 J/g) x 100; and the equation for propylene-based samples is: % Cyst. = ($H_f \div$ 165 J/g) x 100. The "% Cryst." represents the percent crystallinity and "$H_f$" represents the heat of fusion of the polymer in Joules per gram (J/g).

The melting point(s) ($T_m$) of the polymers can be determined from the second heat curve obtained from DSC, as described above. The crystallization temperature ($T_c$) can be determined from the first cooling curve.

The melting point of a composition used to form a film layer can be determined by DSC. The sample (about 5-8 mg) is placed into a DSC sample holder, and the holder is sealed. The sample is heated, at 10°C/min, from 25°C to 280°C, under nitrogen atmosphere, to determine the highest melting peak temperature. In addition, the melting point for a commercially available polymer or resin is typically listed in technical information about the product.

The melting point of a film can be determined by DSC. The film sample (about 5-8 mg) is placed into a DSC sample holder, and the holder is sealed. The sample is heated, at 10°C/min, from 25°C to 280°C, under nitrogen atmosphere, to determine the highest melting peak temperature.

Film shrinkage was measured in accordance with ASTM D-2732-97.

Film tension was measured in accordance with ASTM D-2838-97.

**EXPERIMENTAL**

*Film Fabrication*

A cast film, 2 mil thick, was made from an ethylene-based resin, ELITE™ 5230 (density of 0.916 g/cc, and MI of 4 g/10 min; available from The Dow Chemical Company), The highest melting point of the film was 122°C. The film was stretched (interdigitation) at room temperature. All film samples had continuously stretched segment along the length (MD) and width (CD) of the films.

Each cast film was stretched using grooved interengaged rolls, which incrementally stretched the film in machine or cross direction at room temperature. The stretching of the film was done in two steps. First, the film was incrementally stretched using a pair of grooved interengaged rolls in machine direction (MD). An ellipsoid having a long axis of 38 mm was marked on the film, before stretching, to measure the degree of stretching (orientation). The MD grooved interengaged roll had a gap of 0.1385 inches (3.52 mm) between two blades (flat teeth). The blade thickness was 43 mil (1.09 mm). As discussed above, the "Depth of Engagement (DOE)" is a variable which controls the degree of stretching. At a DOE of 0.09 inch, the ellipsoid long axis stretched from 38 mm to only 39 mm, indicating insignificant degree of stretching (and hence, insignificant expected shrinkage below melting point). Hence, the DOE was increased to 0.2 inch, at which the ellipsoid long axis stretched from 38 mm to 67 mm, indicating 76 percent total elongation or stretching in the machine direction. A film, which was stretched at 0.2 inch DOE at room temperature, was collected on a core.

This "MD stretched film" was subsequently stretched in the cross direction (CD) using another pair of grooved interengaged rolls having the right configuration of blades (teeth) to stretch the film in the cross direction. The CD grooved interengaged roll had a gap of 0.144 inches (3.66 mm) between two blades (flat teeth). The blade thickness was 63 mil (1.6 mm). The "MD stretched film" was stretched in the cross direction using a DOE of 0.2 inch. This substantially biaxially oriented film, oriented using two pair of grooved interengaged rolls at room temperature, was collected on a core for property evaluations.

In the stretching apparatus described above, the film was stretched typically only in the area between the blades. The area of the film in contact with the blade tended not to stretch significantly. Hence, this film is not fully stretched or oriented in the machine and/or cross directions, but rather is substantially stretched or oriented in machine and/or cross directions.

Films (for example, blown, cast, or calendared) from a variety of synthetic polymers, such as ethylene-based polymers, prepared from single site catalysts or Ziegler-Natta catalysts, polyethylenes, such as LDPE, LLDPE and HDPE, polypropylene homopolymer and copolymers, polyester, nylon, polystyrene, and others) can be substantially stretched (in-line or off-line), either monoaxially or biaxially, to make shrink film, using the grooved interengaged rolls, as described herein. As discussed above, such shrink films are easier and cheaper to make, compared to elaborate processes, such as double bubble or tenter-frame biaxial orientation processes.

*Shrinkage and Shrink Tension Data on the Interdigitized Oriented Shrink Film*

The interdigitized, biaxially oriented film, made from the cast film of ELITE™ 5230, using two pairs of grooved interengaged rolls, as described above, was tested for shrinkage properties. Tables 1 and 2 below show the machine direction (MD) and cross direction (CD) shrinkage and shrink tension of the film, measured in a hot-oil bath (30 seconds immersion time). The interdigitized film had uneven thickness due to the nature of stretching process. Hence, these films are characterized by an average thickness and/or basis weight in grams per square meter, GSM. The basis weight of the stretched film was measured to be 19.6 GSM, and the average thickness was calculated to be about 0.85 mil thickness. Film shrinkage was measured in accordance with ASTM D-2732-97. Film tension was measured in accordance with ASTM D-2838-97.

Table 1: Shrinkage Properties

| Shrink Temperature (°C) | % Shrinkage (MD) | % Shrinkage (CD) |
|---|---|---|
| 40 | 1.6 | 0 |
|  | 1.6 | -0.4 |
| 50 | 6 | 1.6 |
|  | 6.5 | -0.4 |
| 60 | 12.4 | 4.5 |
|  | 12.9 | 1.1 |
| 70 | 15.4 | 5 |
|  | 15.4 | 4 |
| 80 | 19.3 | 8.5 |
|  | 18.8 | 9.4 |
| 90 | 25.2 | 16.3 |
|  | 25.2 | 15.4 |
| 100 | 28.1 | 20.3 |
|  | 28.6 | 18.8 |

(continued)

| Shrink Temperature (°C) | % Shrinkage (MD) | % Shrinkage (CD) |
|---|---|---|
| 110 | 34.5 | 24.2 |
| | 36 | 27.2 |
| 115 | 38.5 | 28.6 |
| | 39 | 30.1 |
| 120 | 45.4 | 30.6 |
| | 47.8 | 31.1 |

Table 2: Shrink Tension Properties

| Shrink Temperature (°C) | Shrink Force (MD), pound | Shrink Tension (MD), psi | Shrink Force (CD), pound | Shrink Tension (CD), psi |
|---|---|---|---|---|
| 100 | 0.19 | 225 | 0.098 | 116 |
| | 0.22 | 260 | 0.091 | 108 |
| 110 | 0.194 | 230 | 0.074 | 88 |
| | 0.175 | 207 | 0.083 | 98 |
| (1 lb = 0.4535 g; 1 kPa = 0.1450 psi) | | | | |

It can be seen that the film exhibited high shrinkage (% shrinkage) in both MD and CD, well below the highest melting point of the film (122°C). The film also exhibited high shrink tension, similar to that of a soft shrink film made using a double bubble process. The shrink tension is much higher than that typically obtained for a hot-blown shrink film.

As discussed above, the inventive films exhibit adequate shrink properties at temperature well below melting point of the film. Hence, such films may not experience "burn through" in a shrink tunnel. However, such interdigitized shrink film can be post treated with radiation crosslinking, if needed, to improve the heat resistance (burn through resistance) of the film.

*Shrink Tunnel Testing*

The film, as described above, was subject to shrink tunnel testing in the shrink wrap of video tapes. The shrink tunnel temperature was kept at 275°F, and the belt speed was about 10 ft/min. Very nice shrink wrapped video tapes were obtained from the inventive film with good optics (film still had "embossed" type pattern, originally present in the film as result of the interdigitation process, using grooved rollers). The seal integrity was also maintained after the package went through the shrink tunnel.

The coefficient of friction of the interdigitized shrink film can be controlled by adding appropriate slip and anti-blocking agent. The interdigitized shrink film can also be printed or pigmented with pigments or $TiO_2$ to give a desired film appearance. The interdigitized shrink film can be used in retail clarity shrink film applications, currently dominated by double bubble oriented shrink film.

As discussed, the interdigitized shrink film can also be used in industrial shrink film and beverage overwrap shrink film applications (shrink bundling), currently dominated by mono or multi-layer hot-blown shrink film comprising LDPE resin (mostly blends of LDPE with LLDPE and HDPE resins). An advantage of interdigitized shrink film is that desired shrink properties are obtained, without addition of LDPE resin, as is the case for hot-blown shrink film. Also, the inventive interdigitized shrink film can exhibit desired shrinkage at lower shrink temperature, translating into energy savings or faster production rates. The shrinkage of this interdigitized film can be increased even further via a second step of ring-rolling in MD and CD, if desired.

*Additional Experimentation*

Additional experimentation using cast films formed from ZN catalyzed ethylene/1-octene copolymers as listed below (all available from The Dow Chemical Company), and one high density polyethylene.

DOWLEX™ 2247: MI = 2.3 g/10 min; density = 0.917 g/cc,

DOWLEX™ 2083: MI = 2 g/10 min; density = 0.925 g/cc,

DOWLEX™ 2036: MI = 2.5 g/10 min; density = 0.935 g/cc,

DOWLEX™ 2027: MI = 4 g/10 min; density = 0.941 g/cc, and

HDPE 89 = MI = 4.4 g/10 min; density = 0.952 g/cc.

The films were stretched (interdigitation) at room temperature. Interdigitation Roller Dimensions are shown in Table 3. All film samples have continuously stretched segment along the length (MD) and width (CD) of the films.

Table 3: Interdigitation Roller Dimensions

|  | Blade width (in) | Distance between Blades (in) | Blade width (mm) | Distance between Blades (mm) |
|---|---|---|---|---|
| MD Roll | 0.043 | 0.1385 | 1.0922 | 3.5179 |
| CD Roll | 0.03 | 0.073 | 0.762 | 1.8542 |

Film results are shown in Table 4. In this table, the following acronyms and term are defined as follows: DOE = Depth of Engagement, BOW = Beverage Overwrap, and DB = Double Bubble. The term "Mulch" refers to mulch film, and the term "Industrial" refers to industrial shrink wrap film.

As discussed above, all interdigitation experiments were done at room temperature. An ellipsoid having a long axis of 38 mm was marked on the film before stretching to measure the degree of stretching. As shown in table 4, many of the films were successfully stretched, and should exhibit shrinkage below the highest melting point of the film.

Although the invention has been described in certain detail through the preceding specific embodiments, this detail is for the primary purpose of illustration. Many variations and modifications can be made by one skilled in the art, without departing from the spirit and scope of the invention, as described in the following claims.

Table 4: Film Results

| Polymer | Film Gage* | Potential Appl. | Avg. final Film Thickness | MD DOE | CD DOE | % MD stretch | % CD Stretch | MD Roll speed | CD Roll speed | |
|---|---|---|---|---|---|---|---|---|---|---|
| | (mil) | | (mil) | (in) | (in) | (%) | (%) | ft/min | ft/min | |
| DOWLEX 2247 | 2 | Tray Shrink | 1.09 | 0.14 | 0.08 | 63 | 37 | 40 | 68 | |
| DOWLEX 2083 | 2 | Tray Shrink | 1.08 | 0.14 | 0.08 | 53 | 26 | 41 | 67.5 | |
| DOWLEX 2036 | 2 | Tray Shrink | 1.00 | 0.14 | 0.08 | 57 | 37 | 41 | 67.5 | Holes |
| DOWLEX 2247 | 4 | BOW | 2.29 | 0.14 | 0.085 | 43 | 32 | 41.7 | 62.6 | |
| DOWLEX 2083 | 4 | BOW | 2.30 | 0.14 | 0.085 | 58 | 24 | 38.4 | 61 | |
| DOWLEX 2036 | 4 | BOW | 2.00 | 0.14 | 0.085 | 58 | 29 | 27.2 | 46 | Holes |
| DOWLEX 2247 | 2 | Mulch | 1.21 | NA | 0.11 | NA | 74 | NA | 98 | No Holes |
| DOWLEX 2083 | 2 | Mulch | 1.33 | NA | 0.11 | NA | - | NA | 48 | No Holes |
| DOWLEX 2036 | 2 | Mulch | 1.21 | NA | 0.11 | NA | 97 | NA | 86 | No Holes |
| DOWLEX 2027 | 2 | Mulch | 1.07 | NA | 0.11 | NA | 97 | NA | 86 | No Holes |
| HDPE 8904 | 2 | Mulch | - | NA | 0.11 | NA | 97 | NA | 86 | Film tore along MD, no sample taken |
| DOWLEX 2036 | 2 | Mulch | 1.23 | NA | 0.11 | NA | 84 | NA | 220 | Max. line speed before holes |

| Polymer | Film Gage* | Potential Appl. | Avg. final Film Thickness | MD DOE | CD DOE | % MD stretch | % CD Stretch | MD Roll speed | CD Roll speed | |
|---|---|---|---|---|---|---|---|---|---|---|
| | (mil) | | (mil) | (in) | (in) | (%) | (%) | ft/min | ft/min | |
| DOWLEX 2036 | 4 | BOW | 2.61 | 0.11 | 0.07 | 37 | 18 | 40 | 57 | Holes at 125 ft/min |
| DOWLEX 2083 | 4 | BOW | 2.79 | 0.11 | 0.07 | NM | 8 | 95 | 124 | No holes at 173 ft/min |
| DOWLEX 2247 | 4 | BOW | 2.67 | 0.11 | 0.07 | 29 | 24 | 130 | 168 | No holes up to 270 ft/min |
| DOWLEX 2247 | 4 | Indus -trial | 2.14 | 0.14 | 0.11 | 45 | 53 | 144 | 220 | No holes |
| DOWLEX 2247 | 2 | DB | - | 0.14 | 0.11 | 45 | 58 | 125 | 196 | No holes, Sample not taken |
| DOWLEX 2036 | 2 | Mulch | - | 0.14 | 0.11 | 58 | 18 | | | 70 ft/min line speed |
| NA = Not Applicable<br>NM = Not Measured<br>* Film gage before interdigitation | | | | | | | | | | |

EP 2 099 606 B1

**Claims**

1. A film comprising at least one layer, wherein the at least one layer comprises a surface area, and wherein the surface area comprises a plurality of stretched segments, and
wherein each stretched segment is, independently, at least 2.54cm (one inch) in length, and
wherein the at least one layer is formed from a composition comprising one or more polyolefins, and
wherein the combined weight of the one or more polyolefins is greater than 90 weight percent, based on the total weight of the composition.

2. The film of claim 1, wherein the combined weight of the one or more polyolefins is greater than 95 weight percent, based on the total weight of the composition.

3. The film of claim 1, wherein each stretched segment is, independently, at least 12.7cm (five inches) in length.

4. The film of claim 1, wherein the stretched segments, in any direction, are all of the same length.

5. The film of claim 1, wherein the surface area is rectangular in shape, and each stretched segment runs the entire length of the surface area.

6. The film of any of the preceding claims, wherein the stretched segments are formed by stretching the film at a temperature below the highest melting point of the composition used to form the at least one layer.

7. The film of any of the preceding claims, wherein the stretched segments are formed by stretching the film at a temperature within 50°C below the highest melting point of the composition used to form the at least one layer.

8. The film of any of the preceding claims, wherein the film comprises less than 10 weight percent of a filler, based on the total weight of the film.

9. The film of any of the preceding claims, wherein the film further comprises a barrier layer.

10. The film of claim 9, wherein the barrier layer is formed from a composition comprising at least one polymer selected from the group consisting of polyamides, polyvinylidene chlorides, polyvinyl alcohols, polyesters and combinations thereof.

11. The film of any of the preceding claims, wherein the at least one layer is formed from a composition comprising an ethylene/$\alpha$-olefin interpolymer or a blend thereof.

12. The film of claim 11, wherein the ethylene/$\alpha$-olefin interpolymer has a melt index ($I_2$) from 0.01 g/10 min to 20 g/10 min.

13. The film of any of the preceding claims, wherein the shrinkage of the film is at least 10 percent, at 100°C, in the MD and/or CD direction(s).

14. A shrink film comprising at least one component formed from the film of any of the preceding claims.

15. An article comprising at least one component formed from the film of any of the preceding-claims.

**Patentansprüche**

1. Folie mit mindestens einer Schicht, wobei die mindestens eine Schicht eine Oberfläche umfasst und wobei die Oberfläche eine Vielzahl von gestreckten Segmenten umfasst, und
wobei jedes gestreckte Segment, unabhängig voneinander, mindestens 2,54 cm (1 Inch) lang ist, und
wobei die mindestens eine Schicht aus einer Zusammensetzung gebildet ist, die ein oder mehr Polyolefine umfasst, und
wobei das kombinierte Gewicht der ein oder mehr Polyolefine größer ist als 90 Gew.-%, bezogen auf das Gesamtgewicht der Zusammensetzung.

2. Folie nach Anspruch 1, wobei das kombinierte Gewicht der ein oder mehr Polyolefine größer ist als 95 Gew.-%,

bezogen auf das Gesamtgewicht der Zusammensetzung.

3. Folie nach Anspruch 1, wobei jedes gestreckte Segment, unabhängig voneinander, mindestens 12,7 cm (5 Inch) lang ist.

4. Folie nach Anspruch 1, wobei die gestreckten Segmente, in jeder Richtung, alle gleich lang sind.

5. Folie nach Anspruch 1, wobei die Oberfläche von rechteckiger Form ist und jedes gestreckte Segment über die gesamte Länge der Oberfläche verläuft.

6. Folie nach einem der vorhergehenden Ansprüche, wobei die gestreckten Segmente durch Strecken der Folie bei einer Temperatur unter dem höchsten Schmelzpunkt der zur Bildung der mindestens einen Schicht verwendeten Zusammensetzung gebildet sind.

7. Folie nach einem der vorhergehenden Ansprüche, wobei die gestreckten Segmente durch Strecken der Folie bei einer Temperatur im Bereich von 50°C unter dem höchsten Schmelzpunkt der zur Bildung der mindestens einen Schicht verwendeten Zusammensetzung gebildet sind.

8. Folie nach einem der vorhergehenden Ansprüche, wobei die Folie weniger als 10 Gew.-% eines Füllstoffs umfasst, bezogen auf das Gesamtgewicht der Folie.

9. Folie nach einem der vorhergehenden Ansprüche, wobei die Folie ferner eine Sperrschicht umfasst.

10. Folie nach Anspruch 9, wobei die Sperrschicht aus einer Zusammensetzung gebildet ist, die mindestens ein Polymer umfasst, das aus der aus Polyamiden, Polyvinylidenchloriden, Polyvinylalkoholen, Polyestern und Kombinationen davon bestehenden Gruppe ausgewählt ist.

11. Folie nach einem der vorhergehenden Ansprüche, wobei die mindestens eine Schicht aus einer Zusammensetzung gebildet ist, die ein Ethylen/$\alpha$-Olefin-Interpolymer oder eine Mischung davon umfasst.

12. Folie nach Anspruch 11, wobei das Ethylen/$\alpha$-Olefin-Interpolymer einen Schmelzindex (I2) von 0,01 g/10 min bis 20 g/10 min hat.

13. Folie nach einem der vorhergehenden Ansprüche, wobei die Schrumpfung der Folie mindestens 10 Prozent, bei 100°C, in Maschinenrichtung und/oder in Querrichtung beträgt.

14. Schrumpffolie mit mindestens einer Komponente, die aus der Folie nach einem der vorhergehenden Ansprüche gebildet ist.

15. Gegenstand mit mindestens einer Komponente, die aus der Folie nach einem der vorhergehenden Ansprüche gebildet ist.

**Revendications**

1. Film comprenant au moins une couche, laquelle couche au nombre d'au moins une comprend un zone de surface, laquelle zone de surface comprend plusieurs segments étirés,
et dans lequel chaque segment étiré présente, indépendamment, une longueur d'au moins 2,54 cm (1 pouce),
et dans lequel la couche au nombre d'au moins une est formée d'une composition comprenant une ou plusieurs polyoléfines,
et dans lequel le poids combiné de la polyoléfine ou des polyoléfines représente plus de 90 % du poids total de la composition.

2. Film conforme à la revendication 1, dans lequel le poids combiné de la polyoléfine ou des polyoléfines représente plus de 95 % du poids total de la composition.

3. Film conforme à la revendication 1, dans lequel chaque segment étiré présente, indépendamment, une longueur d'au moins 12,7 cm (5 pouces).

**4.** Film conforme à la revendication 1, dans lequel les segments étirés, dans n'importe quelle direction, ont tous la même longueur.

**5.** Film conforme à la revendication 1, dans lequel la zone de surface est de forme rectangulaire, et chaque segment étiré couvre toute la longueur de la zone de surface.

**6.** Film conforme à l'une des revendications précédentes, dans lequel les segments étirés ont été formés par étirage du film à une température inférieure à la température la plus élevée de fusion de la composition utilisée pour former la couche au nombre d'au moins une.

**7.** Film conforme à l'une des revendications précédentes, dans lequel les segments étirés ont été formés par étirage du film à une température inférieure d'au plus 50 °C à la température la plus élevée de fusion de la composition utilisée pour former la couche au nombre d'au moins une.

**8.** Film conforme à l'une des revendications précédentes, lequel film contient moins de 10 % d'une charge, en poids rapporté au poids total du film.

**9.** Film conforme à l'une des revendications précédentes, lequel film comporte en outre une couche barrière.

**10.** Film conforme à la revendication 9, dans lequel la couche barrière est formée d'une composition comprenant au moins un polymère choisi dans l'ensemble constitué par les polyamides, poly(chlorure de vinylidène), poly(alcool vinylique) et polyesters, ainsi que les combinaisons de tels polymères.

**11.** Film conforme à l'une des revendications précédentes, dans lequel la couche au nombre d'au moins une est formée d'une composition comprenant un interpolymère d'éthylène et d'alpha-oléfine, ou un alliage d'un tel polymère.

**12.** Film conforme à la revendication 11, dans lequel l'interpolymère d'éthylène et d'alpha-oléfine présente un indice $I_2$ de fluidité à chaud qui vaut de 0,01 à 20 g/10 min.

**13.** Film conforme à l'une des revendications précédentes, dont le taux de retrait à 100 °C, dans le sens machine et/ou le sens travers, vaut au moins 10 %.

**14.** Film rétractable comprenant au moins un composant formé d'un film conforme à l'une des revendications précédentes.

**15.** Article comprenant au moins un composant formé d'un film conforme à l'une des revendications précédentes.

# FIG. 1A

# FIG. 1B

# FIG. 2A

# FIG. 2B

# FIG. 3

unstretched    highly stretched

One direction        Two directions

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4153751 A
- US 4251585 A
- US 4144008 A
- US 4368565 A
- US 4223059 A
- US 4285100 A
- US 4116892 A
- US 4350655 A
- US 4289832 A
- US 5691035 A
- US 5518801 A
- US 5151092 A
- US 6394652 B
- US 5723087 A
- US 6605172 B
- US 4438167 A
- US 5650214 A
- US 5205650 A
- US 5865926 A
- US 6818083 B
- US 6811643 B
- EP 1482005 A2
- US 6645691 B
- US 4723393 A
- US 5006380 A
- US 5246110 A
- US 7013621 B
- US 6706288 B
- EP 0628593 A1

- WO 0196104 A
- WO 03070455 A
- JP 2001114379 A
- JP 2001002162 A
- JP 60060733 A
- US 5844045 A, Kolthammer
- US 5869575 A
- US 6448341 A
- US 3645992 A, Elston
- US 4076698 A, Anderson
- US 4798081 A
- US 5008204 A
- US 5272236 A
- US 5278272 A
- US 5703187 A
- US 4339507 A
- US 5414027 A, DeNicola
- EP 0190889 A
- US 5464907 A
- EP 0754711 A
- US 09133576 B
- US 6919407 B
- US 6723398 B
- US 4927888 A, Strait
- US 4950541 A, Tabor
- US 4762890 A, Strait
- US 5346963 A, Hughes
- US 4684576 A, Tabor

**Non-patent literature cited in the description**

- **Randall.** *Rev. Macromol. Chem. Phys.,* 1989, vol. C29 (2&3), 285-297
- **Wild et al.** *Journal of Polymer Science, Poly. Phys. Ed.,* 1982, vol. 20, 441
- **Galli et al.** *Angew. Macromol. Chem.,* 1984, vol. 120, 73

- **E.P. Moore et al.** Polypropylene Handbook. Hanser Publishers, 1996, 11-98
- **Kirk-Othmer.** The Encyclopedia of Chemical Technology. John Wiley & Sons, 1981, vol. 16, 416-417
- THE ENCYCLOPEDIA OF CHEMICAL TECHNOLOGY. vol. 18, 191-192